# EUROPÄISCHE PATENTSCHRIFT

(11) **EP 1 332 083 B1**
(45) Veröffentlichungstag und Bekanntmachung des Hinweises auf die Patenterteilung: **08.09.2010**
(21) Anmeldenummer: 01980188.5
(22) Anmeldetag: 29.09.2001
(51) Int. Cl.: B62D 5/04, B62D 5/06, B62D 5/30

(54) **VERFAHREN ZUM STEUERN EINES STEER-BY-WIRE-LENKSYSTEMS**
METHOD FOR CONTROLLING A STEER-BY-WIRE SYSTEM
PROCEDE DE COMMANDE D'UN SYSTEME DE DIRECTION D'ORIENTATION PAR CABLES

(30) Priorität: 21.10.2000 DE 10052343
(43) Veröffentlichungstag der Anmeldung: 06.08.2003
(73) Patentinhaber: ROBERT BOSCH GMBH, 70442 Stuttgart (DE); ZF Lenksysteme GmbH, 73527 Schwäbisch Gmünd (DE)
(72) Erfinder: DOMINKE, Peter, 74321 Bietigheim-Bissingen (DE); CAO, Chi-Thuan, 70825 Korntal-Muenchingen (DE); PFEIFFER, Wolfgang, 71723 Grossbottwar (DE); YUAN, Bo, 71254 Ditzingen (DE); LEIMBACH, Klaus-Dieter, 73569 Eschach (DE); MUELLER, Bernd, 71229 Leonberg (DE); HARTER, Werner, 75428 Illingen (DE); BLESSING, Peter, 74078 Heilbronn (DE); SCHUELLE, Juergen, 73525 Schwäbisch Gmünd (DE); LOHNER, Herbert, 71292 Friolzheim (DE)
(86) Internationale Anmeldenummer: PCT/DE2001/003752
(87) Internationale Veröffentlichungsnummer: WO 2002/032742

(56) Entgegenhaltungen:
- DE-A- 19 838 490
- DE-A- 19 841 101
- DE-A- 19 842 627
- DE-A- 19 912 169
- DE-C- 19 801 393

## Beschreibung

### Stand der Technik

Die Erfindung betrifft ein Verfahren zum Steuern eines Steer-by-Wire-Lenksystems und ein Steer-by-Wire-Lenksystem für Fahrzeuge, mit einem am Lenkgetriebe der Vorderachse oder an beiden lenkbaren Vorderrädern angebrachten, elektronisch geregelten Lenksteller, einem den Fahrerlenkwunsch am Lenkrad abgreifenden Lenkradwinkelsensor, einer Rückwirkungen der Straße an den Fahrer über das Lenkrad übermittelnde Feedback-Aktuatoreinheit, einem Lenkwinkelsensor zur Erfassung des aktuellen Lenkwinkels am Lenkgetriebe der Vorderachse oder an den beiden Vorderrädern sowie mit einem Steuergerät zur Erfassung der von den Sensoren gelieferten Signale und Berechnung von Ansteuersignalen für den Lenksteller und die Feedback-Aktuatoreinheit.

Ein Steer-by-Wire-Lenksystem ist aus der DE 195 40 956 C1 bekannt. Bei diesem Lenksystem lässt sich die mechanische Verbindung zwischen Lenkrad und einem auf die gelenkten Rädern wirkenden Lenkgetriebe durch Öffnen einer Kupplung auftrennen. Dann ist dieses Lenksystem ein Steer-by-Wire-Lenksystem, bei dem das Lenkrad lediglich mittelbar mit der Lenkgetriebeanordnung gekoppelt ist. Bei diesem bekannten Steer-by-Wire-Lenksystem ist zur Übermittlung der Rückwirkungen der Straße an den Fahrer über das Lenkrad eine Feedback-Aktuatoreinheit vorgesehen, die als selbsthemmungsfreier Elektromotor ausgeführt ist und, angesteuert von einer Steuervorrichtung am Lenkrad, einen steuerbaren Betätigungswiderstand bewirkt.

Ohne geeignete Vorkehrungen führt ein Fehler innerhalb eines Steer-by-Wire-Lenksystems unmittelbar zu einer Gefahr für Leib und Leben des Fahrers. Daraus ergibt sich die Forderung, dass kein Einzelfehler des Steer-by-Wire-Lenksystems zu dessen Versagen führen darf.

Aus der DE 198 42 627 A1, die dem Oberbegriff des Anspruchs 1 entspricht, ist ein Steer-by-Wire-Lenksystem mit einer hydraulischen Rückfallebene bekannt. Bei diesem Steer-by-Wire-Lenksystem sind ein Lenkwinkelsteuergerät und ein Handmomentensteiuergerät vorhanden. Beide Steuergeräter können über einen datenbus miteinander kommunizieren und bei Bedarf die Funktionen des jeweils anderen Steuergeräts übernehmen.

Es ist Aufgabe der Erfindung, ein Verfahren zum Betreiben eines Steer-by-Wire-Lenksystems und ein Steer-by-Wire-Lenksystem bereitzustellen, das alle Steer-by-Wire-Funktionen, einschließlich der Funktionen für den Feedback-Aktuator, mit einem höchstmöglichen Maß an Sicherheit realisieren kann. Generell sollte ein erfindungsgemäßes Steer-by-Wire-Lenksystem das Sicherheitsniveau einer konventionellen Servolenkung erreichen bzw. übertreffen.

Die obige Aufgabe wird durch ein Verfahren nach Anspruch 1, durch ein Steuergerät nach dem nebengeordneten Anspruch 20 und ein Steer-by-Wire-Lenksystem nach Anspruch 25 gelöst.

### Vorteile der Erfindung

Aufgrund der Redundanz der Messwerterfassung, der Ansteuerung des Lenkstellers und des Feedbackaktuators, der Überprüfung sämtlicher Funktionen und Komponenten und der Kommunikation ist eine große Sicherheit gegenüber Funktionsstörungen gegeben.

Vor allem durch die diversitäre Erfassung verschiedener Messgrößen wie Lenkradwinkel, Lenkwinkel, Rückstellmoment u.a. mehr wird eine Plausibilitätsprüfung der verschiedenen Messwerte und die Bestimmung eventuell fehlerbehafteter Messwerte erleichtert. Dadurch steigt die Zuverlässigkeit und Ausfallsicherheit eines nach dem erfindungsgemäßen Verfahren arbeitenden Steer-by-Wire-Lenksystems.

Die Sicherheit wird weiter erhöht durch die redundante Kommunikation innerhalb des Steuergeräts und mit anderen Steuergeräten oder Sensoren des Fahrzeugs, sowie dadurch, dass das Umschalten vom Steer-by-Wire-Betrieb auf die Rückfallebene erst nach Ablauf einer Übergangszeit nach dem Auftreten eines Fehlers erfolgt. Durch die letztgenannte Maßnahme wird gewährleistet, dass sich sämtliche Funktionen des Steer-by-Wire-Lenksystems in einem definierten Zustand befinden, wenn auf die Rückfallebene umgeschaltet wird.

Die Zuverlässigkeit eines nach dem erfindungsgemäßen Verfahrens arbeitetenden Steer-by-Wire-Lenksystems wird weiter erhöht durch die Aufteilung der Funktionen innerhalb des Steuergeräts auf vier LogikEbenen. Durch diese Aufteilung der Funktionen und die gegenseitige Kontrolle werden eventuell auftretende Fehler und Fehlfunktionen mit größtmöglicher Sicherheit erfasst und entsprechende Reaktionen des Steer-by-Wire-Lenksystems ermöglicht.

Im Falle des separaten Überwachungsmoduls weist das Steuergerät zwei Hardware-Ebenen und vier logische Ebenen auf. In den Hardware-Ebenen wirken der Mikrorechner bzw. die Mikrorechner und das Überwachungsmodul zusammen. Das Überwachungsmodul kommuniziert mit dem Mikrorechner oder den Mikrorechnern über ein internes Bussystem. Dabei wird die Rechenfähigkeit des Mikrorechners bzw. der Mikrorechner überprüft und die Programmabläufe innerhalb des Rechners bzw. der Rechner überwacht. Durch die gewählte Art der Datenkommunikation zwischen dem Mikrorechner bzw. den Mikrorechnern und dem Überwachungsmodul wird eine gegenseitige Überwachung dieser Komponenten ermöglicht.

Weitere Vorteile und vorteilhafte Ausgestattungen sind der Erfindung und der nachfolgenden Beschreibung, der Zeichnung und den Patentansprüchen entnehmbar.

### Zeichnung

Es zeigen:
- Figur 1: schematisch ein Steer-by-Wire-Lenksystem mit hydraulischer Rückfallebene und einem elektromotorischen Lenksteller;
- Figur 1a:: ein Steer-by-Wire-Lenksystem mit mechanischer Rückfallebene;
- Figur 2: schematisch ein Steer-by-Wire-Lenksystem mit hydraulischer Rückfallebene und zwei elektromotorischen Lenkstellern;
- Figur 3: ein Funktionsschema eines Steer-by-Wire- Lenksystems mit einem Lenksteller;
- Figur 4: ein Funktionsschema eines Steer-by-Wire- Lenksystems mit zwei Lenkstellern;
- Figur 5: die Struktur eines bei der Erfindung einsetzbaren Steuergeräts mit einem Mikrorechner und einem separaten Überwachungsmodul;
- Figur 6: eine Steuergerätestruktur mit zwei Mikrorechnern und jeweils einem separaten Überwachungsmodul;
- Figur 7: die Struktur eines Steuergeräts mit zwei Mikrorechnern, die die Überwachungsmittel selbst enthalten;
- Figur 8: eine Steuergerätestruktur mit drei Mikrorechnern,
- Figur 9: eine Steuergerätestruktur eines weiteren erfindungsgemäßen Steer-by-Wire-Lenksystems,
- Fig 10: eine Logikschaltung zur Ansteuerung der Freigabesignale der Leistungselektrcnikeinheiten,
- Fig 11: die dynamische Ansteuerung der Freigabesignale der Leistungselektronikeinheiten und
- Fig.12: eine Logikschaltung zur Ansteuerung der Kupplung

### Beschreibung der Ausführungsbeispiele

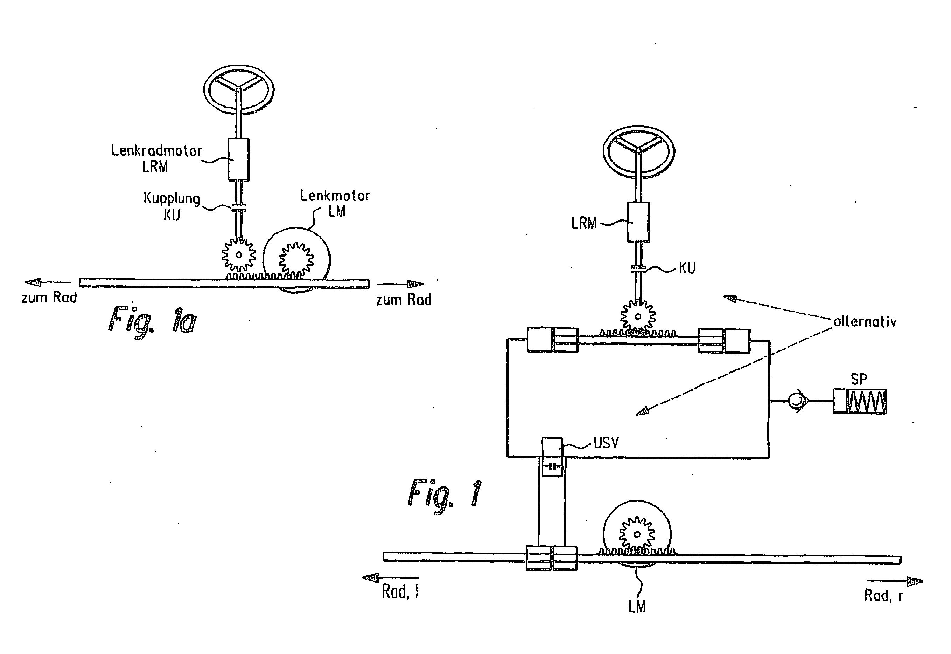

Vorab wird anhand der Figuren 1 bis 4 die Struktur und grundsätzliche Funktionsweise eines Steer-by-Wire-Lenksystems mit hydraulischer oder mechanischer Rückfallebene beschrieben. Ein Steer-by-Wire-Lenksystem mit hydraulischer Rückfallebene ist Gegenstand der deutschen Patentanmeldung 198 38 490.4 der Robert Bosch GmbH.

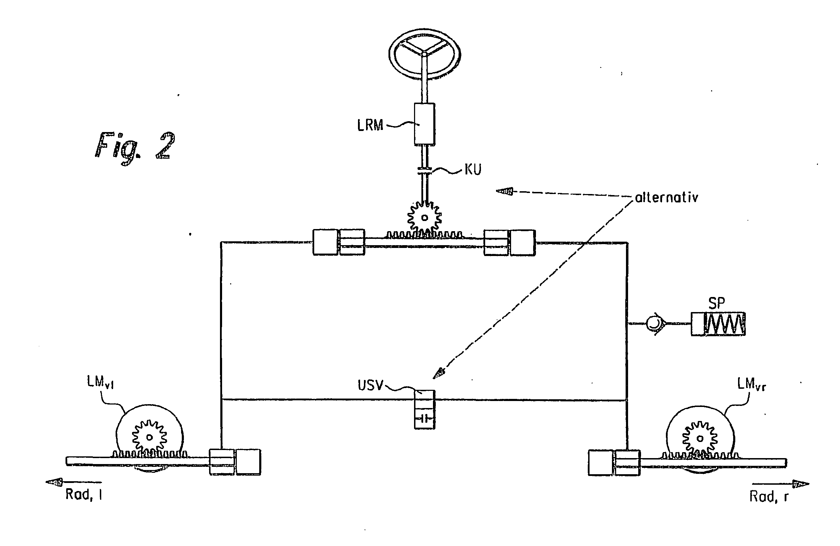

Die in Figur 1 gezeigte Struktur unterscheidet sich von der in Figur 2 gezeigten Struktur darin, dass bei dem Steer-by-Wire-Lenksystem gemäß Figur 1 im Steer-by-Wire-Betrieb die nicht dargestellten gelenkten Räder durch einen Lenkmotor LM verstellt werden, während Figur 2 eine Ausführungsvariante mit zwei Lenkmotoren LMᵥₗ und LMᵥᵣ darstellt.

In den Figuren 1 und 2 ist ein Lenkradmotor LRM dargestellt, welcher den Feedback-Aktuator für die dem Fahrer über das Lenkrad zu übertragenden Rückstellkräfte bildet.

Die hydraulische Rückfallebene ist durch symmetrische Hydraulikzylinder, einen Druckspeicher SP für Hydraulikfluid und wahlweise eine Kupplung KU zwischen Lenkradmotor LRM und dem mechanischen Eingriff der Lenksäule an den beiden lenkradseitigen Hydraulikzylindern oder ein den (die) lenkgetriebeseitigen Hydraulikzylinder im Steer-by-Wire-Betrieb kurzschließendes Umschaltventil USV angegeben, wobei diese Hydraulikkomponenten untereinander durch Hydraulikleitungen verbunden sind.

Bei der in Figur 2 gezeigten Variante mit einem linksseitigen und rechtsseitigen Lenkmotor LMᵥₗ und LMᵥᵣ sind im Unterschied zu Figur 1 statt des einen lenkgetriebeseitigen Doppelzylinders zwei Einzelhydraulikzylinder für die hydraulische Rückfallebene vorgesehen, und das Umschaltventil USV liegt in einer Bypassleitung zwischen den beiden durch eine Hydraulikleitung miteinander verbundenen lenkgetriebeseitigen Hydraulikzylindern.

Ein Ausführungsbeispiel eines Steer-by-Wire-Lenksystems mit mechanischer Rückfallebene ist in Figur 1a dargestellt. Die mechanische Rückfallebene weist eine geteilte Lenksäule und eine Kupplung KU in der Lenksäule auf. Im Steer-by-Wire-Betrieb ist die Kupplung KU geöffnet und damit ist der mechanische Durchgriff zwischen Lenkrad und Zahnstange des Lenkgestänges unterbrochen. Eine Lenkbewegung erfolgt durch den Lenkmotor LM unter Zwischenschaltung eines Getriebes und eines Lenkgestänges.

Im Falle eines Fehlers wird die Kupplung KU geschlossen, so dass ein direkter Durchgriff des Lenkrads auf die Zahnstange des Lenkgestänges gegeben ist. Die Kupplung KU ist im spannungslosen Zustand des Steuergerätes geschlossen.

Anstelle der in den Figur 1, 1a und 2 dargestellten Ausführungsvarianten eines direkten Stelleingriffes des Lenkmotors LM könnte der Lenkmotor LM auch die Verstellung des Hydraulikstromes zur Lenkmomentunterstützung über den Drehschieber einer hydraulischen Servolenkung realisieren.

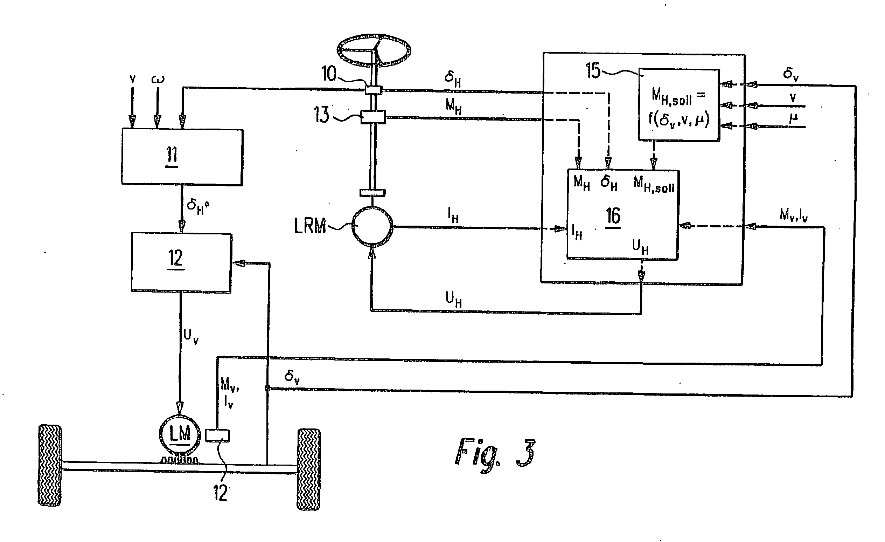

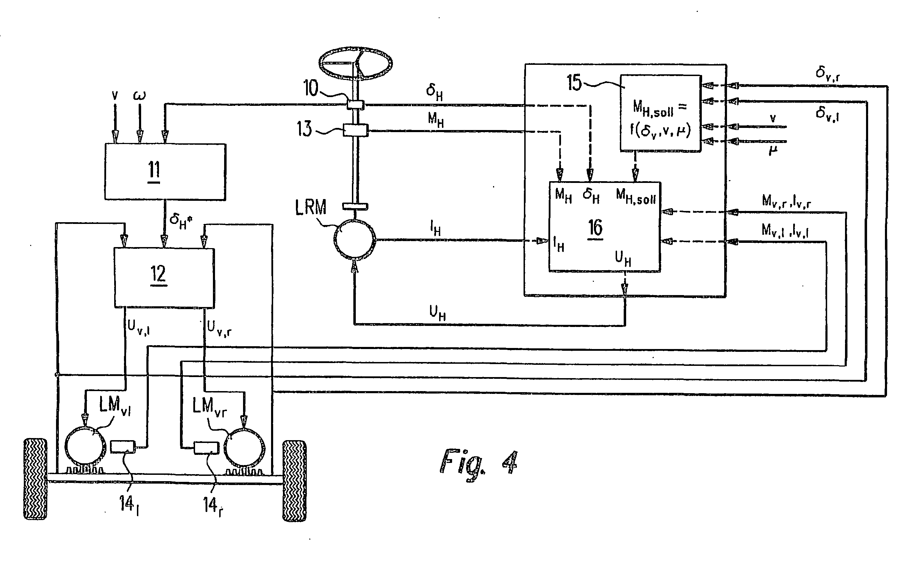

In den Figuren 3 und 4 ist in Form von Funktionsblöcken die grundsätzliche Steuer- und Regelstruktur eines Steer-by-Wire-Lenksystems dargestellt.

Der vom Fahrer vorgegebene Lenkradwinkel δ_{H} wird durch einen Lenkradwinkelsensor 10 erfasst. Der Lenkradwinkel δ_{H} wird gezielt mit Hilfe einer Sollwertbildung 11 situationsabhängig unter Verwendung von fahrdynamischen Größen, wie z. B. Fahrgeschwindigkeit v, Gierwinkelgeschwindigkeit ω zu einem modifizierten Lenkradwinkel δ_{H*} modifiziert, der als Sollwert eines Lenkreglers 12 dient.

Der Lenkregler 12 erzeugt für den Lenkmotor LM eine Stellgröße, die in Form einer Spannung Uᵥ dem Lenkmotor LM angelegt wird.

Alternativ erzeugt gemäß den Figuren 2 und 4, wo an jedem Vorderrad ein Lenkmotor LMᵥₗ, LMᵥᵣ angebracht ist, der Lenkregler 12 als Stellsignale eine Spannung U_{v,l} für den linken Lenkmotor LMᵥₗ und eine Spannung U_{v,r} für den rechten Lenkmotor LMᵥᵣ. In diesem Fall können die Vorderräder radweise und prinzipiell unabhängig voneinander gelenkt werden. In Figur 3 empfängt der Lenkregler den sensorisch gemessenen Lenkwinkel δ_{V} für beide Vorderräder und in Figur 4 separat die sensorisch gemessenen Lenkwinkel δ_{v,l} und δ_{v,r} jeweils für das linke und rechte Vorderrad.

Die Rückwirkungen von der Fahrbahn auf die gelenkten Räder, welche den Fahrerlenkwunsch δ_{H} stark beeinflussen, können z. B. mit einem Rückstellomenentensensor 14 als Rückstellmoment Mᵥ bzw. an beiden Rädern als Rückstellmomente M_{v,l} und M_{v,r} gemessen werden. Um diese Rückwirkungen auch dem Fahrer mitzuteilen ist ein Feedback-Aktuator vorgesehen, der der Lenksäule und damit auch dem Lenkrad des Fahrzeugs ein den Rückwirkungen enstprechendes Moment aufprägt. Dieses nachfolgend als Handmoment M_{H} bezeichnete Moment kann von einem Handmomentensensor 13 an der Lenksäule gemessen werden.

Der Feedback-Aktuator des mit Steer-by-Wire-Lenksystem ausgestatteten Fahrzeugs besteht aus dem elektrischen Lenkradmotor LRM, der über ein Getriebe (nicht dargestellt) mit dem Lenkrad gekoppelt ist und gemäß den Figuren 3 und 4 durch einen Lenkradregler 16 geregelt wird. Hierzu ermittelt der Lenkradregler 16 ein Sollhandmoment M_{H,Soll} auf der Basis des von einem Rückstellmomentensensor 14 gemessenen Rückstellmoments M_{V} oder auf der Basis der Ströme (Iᵥ, I_{v,l}, I_{v,r}). an den Lenkmotoren LM, LMᵥₗ, LMᵥᵣ).

Im Folgenden werden die Begriffe Lenksteller und Lenkmotor sowie Feedback-Aktuator und Lenkradmotor synonym verwandt.

Alternativ kann der Lenkradregler 16 das Sollhandmoment M_{H,Soll} auch mit Hilfe eines Feedback-Simulators 15 aus den sensorisch gemessenen Lenkwinkeln δᵥ (bzw. δ_{v,l} und δ_{v,r}) und anderen im Fahrzeug vorhanden Signalen, wie der Fahrgeschwindigkeit v und dem Reibbeiwert µ zwischen Straße und Reifen nachbilden. Der Lenkradregler 16 steuert den Lenkradmotor LRM mit der Stellgröße U_{H} entsprechend dem Sollhandmoment M_{H,Soll} so an, dass das vom Handmomentensensor 13 gemessene Handmoment M_{H} dem Sollhandmoment M_{H,Soll} entspricht.

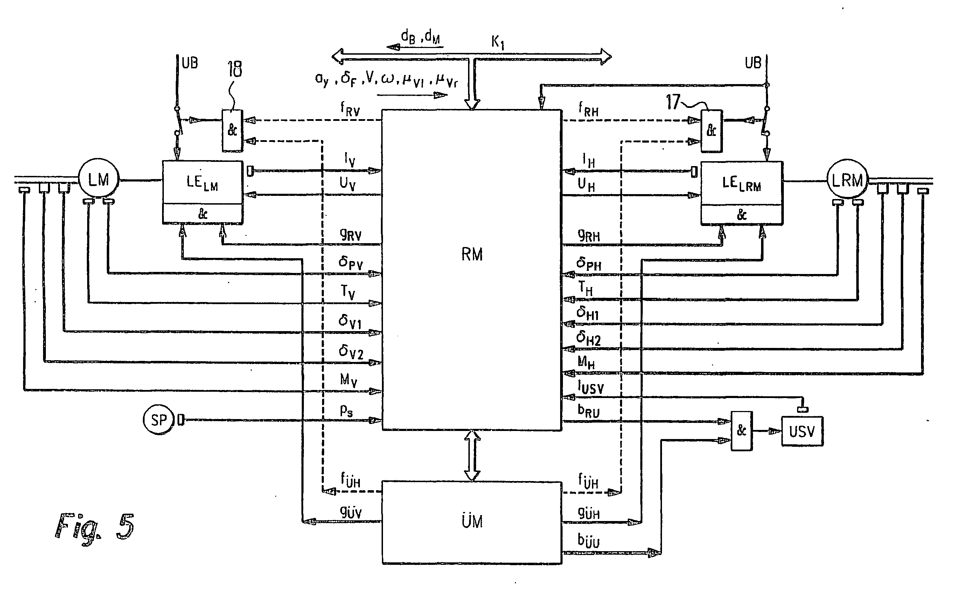

Anhand der Figuren 5 bis 8 werden vier Ausführungsvarianten erfindungsgemäßer Steuergeräte in ihrer Struktur und Funktion dargestellt.

Figur 5 zeigt als Blockschema eine Ausführungsvariante eines Steuergeräts mit einem einzigen Mikrorechnersystem. Das Mikrorechnersystem beinhaltet einen Mikrorechner RM sowie die zugehörigen Peripheriekomponenten für die Erfassung aller Sensorsignale. Zudem sind darin auch die erforderlichen Verarbeitungsfunktionen zur Bildung der Ansteuersignale für die Leistungselektronikkomponenten LE_{LM}, LE_{LRM} zur Erzeugung der Ansteuersignale U_{H} für den Lenkradmotor LRM und U_{V} bzw. U_{v,l} und U_{v,r} für den Lenkmotor LM bzw. die Lenkmotoren LMᵥₗ und LMᵥᵣ enthalten. K₁ bezeichnet ein Kommunikationssystem, das z. B. durch einen seriellen Bus wie einen CAN-Bus realisiert ist, der die Verbindung zu weiteren Steuergeräten im Kraftfahrzeug oder auch zu einem Diagnosesystem für die Fehlerinformation herstellt. K₁ kann einfach oder redundant sein.

Das Überwachungsmodul ÜM innerhalb des Steuergeräts dient zur Überwachung des fehlerfreien Betriebs der Steer-by-Wire-Funktionen des Mikrorechners RM und der dazugehörigen Peripheriekomponenten und kann z. B. als Mikroprozessor oder ASIC realisiert sein.

Im Mikrorechner RM sind folgende Funktionen implementiert:
- Sensorsignalerfassung und Berechnung der Ansteuersignale U_{H} für die Regelung des Lenkradmotors LRM,
- Sensorsignalerfassung und Berechnung der Ansteuersignale Uᵥ für die Regelung des Lenkmotors LM,
- Überwachung der Rückfallebene
- Schnittstelle zum Kommunikationssystem K₁

Eine detaillierte Beschreibung dieser Teilfunktionen wird in den folgenden Abschnitten A bis H dargestellt.

### A: Sensorsignalerfassung und Berechnung der Ansteuersignale für die Regelung des Lenkradmotors

Zur Ansteuerung des Lenkradmotors LRM werden folgende Signale über periphere Komponenten des Mikrorechnersystems RM erfasst:
- Lenkradwinkel δ_{H1} und δ_{H2},
- Motormoment M_{H} des Lenkradmotors LRM. In einer weiteren Realisierungsvariante erfolgt die Bestimmung des Motormomentes durch die gemessenen Motorströme;
- Rotorposition δ_{PH} des Lenkradmotors LRM; z. B. bei Verwendung eines BLDC-, Asynchron- oder Switched-Reluctance Motors,
- Istwerte der Phasenströme I_{H} des Lenkradmotors LRM,
- Temperatur T_{H} des Lenkradmotors LRM; in einer alternativen Realisierung kennzeichnet das Signal T_{H} die Temperatur der Endstufen innerhalb der Leistungselektronik LE_{LRM} für den Lenkradmotor LRM oder beinhaltet beide Temperaturen,
- Klemmenspannung des Bordnetzes UB.

Für die Ansteuerung der Leistungselektronik LE_{LRM} dient primär das Ansteuersignal U_{H}. Dieses Ansteuersignal ist Stellgröße eines digitalen Reglers und kann z. B. als impulsdauermoduliertes (PWM)-Signal ausgegeben werden. Die Stellgröße U_{H} wird aus dem gemessenen Motormoment M_{V} des Lenkmotors LM, der Rotorposition δ_{RH} des Lenkradmotors LRM und weiteren Kenngrößen, die den Zustand der Fahrzeuges bzw. der Fahrbahn charakterisieren, berechnet. Eine Ansteuerung des Lenkradmotors LRM über die Leistungselektronik LE_{LRM} erfolgt auf die Freigabe durch die Freigabesignale g_{RH} und g_{ÜH}. Ein der Leistungselektronik vorgeschaltetes erstes Motorrelais 17 wird über die Signale f_{RH} und f_{ÜH} angesteuert.

### B: Sensorsignalerfassung und Berechnung der Ansteuersignale für die Regelung des Lenkmotors

Zur Ansteuerung des Lenkmotors LM werden die folgenden Signale über periphere Komponenten innerhalb des Mikrorechnersystems RM erfasst:
- Lenkwinkel δ_{V1} und δ_{V2},
- Motormoment M_{V} des Lenkmotors LM,
- Rotorposition δ_{PV} des Lenkmotors, z. B. bei Verwendung eines BLDC-, Asynchron- oder Switched-Reluctance Motors,
- Istwerte der Phasenströme I_{V} des Lenkmotors,
- Temperatur T_{V} des Lenkmotors; in einer alternativen Realisierung kennzeichnet das Signal T_{V} die Temperatur der Endstufen innerhalb der Leistungselektronik LE_{LM} für den Lenkmotor oder beinhaltet beide Temperaturen und
- optional die Klemmenspannung UB des Bordnetzes.

Zur Regelung des gewünschten Lenkwinkels δ_{V} wird zunächst aus den gemessenen Größen δᵥ₁ und δᵥ₂ der repräsentative Wert z. B. durch Mittelwertbildung bei voll funktionsfähiger Winkelsensorik gebildet. Die Führungsgröße des Reglers wird bei der Sollwertbildung aus einem repräsentativen Wert der gemessenen Lenkradwinkel δ_{H1} und δ_{H2} und der aktuellen Lenkübersetzung gebildet. Bei Lenkeingriffen durch ein fahrdynamisches System wird die Führungsgröße für den Lenkwinkel zusätzlich unter Verwendung der Gierwinkelgeschwindigkeit ω und der Querbeschleunigung a_{y} des Fahrzeugs berechnet, oder es wird ein über das Kommunikationssystem K₁ übermittelter Winkel bzw. Differenzwinkel δ_{F} verwendet. Bei Nutzung der Steuergerätestruktur zur Realisierung eines Spurführungssystems könnte der Winkel δ_{F} auch die Führungsgröße für den Lenkwinkeleingriff repräsentieren, der von einem übergeordneten Steuersystem berechnet und vorgegeben wird.

Die Ansteuerung der Leistungselektronik LE_{LM} des Lenkmotors LM wird primär durch das Ansteuersignal U_{V} durchgeführt. Dieses Ansteuersignal ist Stellgröße eines digitalen Reglers und kann z. B. als PWM-Signal ausgegeben werden. Dabei ist die aktuell verfügbare Spannungslage der Bordnetzspannung UB zu berücksichtigen. Eine Ansteuerung des Lenkmotors LM über die Leistungselektronik LE_{LM} erfolgt, falls die Freigabesignale g_{RV} und g_{ÜV} gesetzt sind. Ein der Leistungselektronik vorgeschaltetes zweites Motorrelais 18 wird über die Signale f_{RV} und f_{ÜV}. angesteuert.

### C: Überwachung der Rückfallebene und Umschaltung auf die Rückfallebene.

Wesentliche Kenngröße der Verfügbarkeit der Rückfallebene des Steer-by-Wire-Lenksystems ist der Druck pₛ in der Hydraulikeinheit. Dieser Druck pₛ wird am Druckspeicher SP fortlaufend oder in gewissen Zeitabschnitten gemessen und dem Mikrorechner RM in Form eines analogen Signales pₛ übermittelt. Das Umschaltventil USV wird im Normalbetrieb über die Signale b_{RU} und b_{ÜU} vom Überwachungsmodul ÜM angesteuert. Fehlt eines dieser Ansteuersignale, so schaltet das Umschaltventil USV in die hydraulische Rückfallebene um. Bei Ausfall des Bordnetzes ist damit automatisch ein Betrieb in der Rückfallebene gegeben. Im Falle eines signifikanten Fehlers wird vom Steer-by-Wire-Lenksystem das Ansteuersignal b_{RU} bzw. vom Überwachungsmodul das Signal b_{ÜU} weggenommen und damit in die Rückfallebene umgeschaltet.

### D: Schnittstelle zu weiteren Steuergeräten bzw.Anzeigeeinheiten

Über das Kommunikationssystem K₁ werden die Sensorsignale für die Gierwinkelgeschwindigkeit ω und für die Querbeschleunigung a_{y} dem Mikrorechnersystem zugeführt. Zudem werden über Kₗ Schätzwerte für die Reibkoeffizienten µᵥₗ und µᵥᵣ zwischen linkem Rad und Straße sowie zwischen rechtem Rad und Straße und ein Schätzwert der Fahrzeuggeschwindigkeit v übertragen. Außerdem kann über dieses Kommunikationssystem eine Führungsgröße δ_{F} für den Radlenkwinkel bei einem Fahrdynamikeingriff über das Lenksystem oder bei einem Spurführsystem vorgegeben werden.

Über dieses Kommunikationssystem können zudem Signale d_{B} einem nicht dargestellten Informationssystem übermittelt werden, die den Fahrer über eventuelle Fehlerzustände des Systems oder z. B. auch über die Umschaltung in die hydraulische Rückfallebene informieren. Die Signale dₘ werden an andere Steuergeräte gesandt, die z. B. eine Reduzierung der Fahrgeschwindigkeit bei einem Übergang in die hydraulische Rückfallebene bewirken.

### E: Sicherheitsmaßnahmen im Steuergerät

Zur Einhaltung der an ein Steer-by-Wire-Lenksystem gestellten Sicherheitsanforderungen müssen alle innerhalb des Systems auftretenden Einfachfehler in einer systemtypischen Fehlertoleranzzeit sicher erkannt werden. Nach dem Erkennen eines signifikanten Fehlers wird das SbW-Lenksystem während einer Übergangszeit (z.B. innerhalb 5 sec) zunächst in einen Rückfallbetriebszustand überführt. In diesem Betriebszustand werden keine übergeordneten Lenkfunktionen mehr durchgeführt, d.h. fahrdynamische Lenkeingriffe, Lenkeingriffe zur Seitenwindkompensation oder Eingriffe in das Lenksystem, die das Übersetzungsverhältnis zwischen Lenkradwinkel und Lenkwinkel verändern, werden definiert beendet. Nach Ablauf dieser Übergangszeit oder nach Beendigung aller übergeordneten Lenkfunktionalitäten oder bei Auftreten eines signifikanten zweiten Fehlers in der Übergangszeit wird die Ansteuerung der Kupplung KU (siehe Fig. 1, 1a und 2) in der Lenksäule beendet und somit die Rückfallebene aktiviert. Hierzu sind folgende Maßnahmen vorgesehen:
- Redundante Erfassung des Lenkradwinkels (δ_{H1}, δ_{H2})
- Redundante Erfassung des Lenkwinkels δ_{V} bzw. der Lenkwinkel an der Vorderachse (δ_{V1}, δ_{V2})
- Ansteuerung des Lenkradmotors (LRM) über die Steuersignale U_{H} für die Phasenströme und das Freigabesignal g_{RH}
- Redundanter Abschaltpfad für den Lenkradmotor LRM wie auch für den Lenkmotor LM über zugeordnete Motorrelais (nicht bei Switched-Reluctance-Motoren)
- Überwachung der Sensorsignale durch Plausibilitätsprüfungen und analytische Redundanz - Überwachung des Mikrorechnermoduls RM durch das Überwachungsmodul ÜM und umgekehrt.

### F: Überwachungskonzept des Steuergeräts

Das Überwachungskonzept des Steuergeräts ist in vier logische Ebenen L₁, L₂, L₃ und L₄ und zwei Hardwareebenen RM und ÜM strukturiert.

Das Überwachungsmodul ÜM kommuniziert mit dem Mikrorechnermodul RM mittels eines internen Bussystems. Dies dient zur Überprüfung der Rechenfähigkeit dieses Mikrorechnersystems und zur Überwachung der Programmabläufe innerhalb des Rechners. Durch die gewählte Art der Datenkommunikation zwischen dem Mikrorechnermodul RM und dem Überwachungsmodul ÜM werden diese Komponenten gegenseitig überwacht. Dazu sind den logischen Ebenen folgende Funktionen zugeordnet:

### Ebene L₁

Die Ebene L₁ ist im Mikrorechner RM realisiert. Sie übernimmt folgende Aufgaben:
- Plausibilitätsüberprüfungen der Eingangssignale
- Auswahl der für die Verarbeitung erforderlichen Lenkradwinkel und Lenkwinkel aus den jeweils redundant vorliegenden Sensorsignalen
- Berechnung der Regelfunktionen für die Ansteuerung des Lenkradmotors (LRM) und Lenkmotors (LM)
- Änderung der Ansteuerung des Umschaltventils USV im Fehlerfall zum Übergang in die hydraulische Rückfallebene

### Ebene L₂

Die Ebene L₂ ist im Mikrorechner RM eingebunden. Diese Ebene übernimmt die Prüfung der Korrektheit der in Ebene L₁ durchgeführten Berechnungen mittels Algorithmen, die diversitär zu denen in Ebene L₁ sind. Zur Durchführung der Berechnungen werden zudem die redundant in den Speicherzellen abgelegten Eingangsdaten verwendet, wodurch Fehler durch verfälschte Speicherinhalte erkannt werden. Für die Überprüfung der Reglerfunktionen sind vereinfachte parallel geschaltete Regleralgorithmen vorgesehen, die mit den redundant abgelegten Daten für die Führungsgrößen und den aktuellen Istwerten der Regelgrößen berechnet werden. Bei signifikanten Abweichungen zwischen diesen vereinfachten Stellgrößenberechnungen und den in Ebene L₁ durchgeführten Berechnungen wird ein Fehlerzustand erkannt. Zudem wird in Ebene 2 auch die korrekte Funktion der beiden Regelstrecken überprüft. Hierzu ist jeweils ein mathematisches Modell der Regelstrecke vorgesehen, das die dynamischen Zusammenhänge zwischen den Stellgrößen und den Regelgrößen auch unter Einbeziehung von Störgrößen beschreibt. Diesen Modellen werden die in den Regelalgorithmen in Ebene L₁ berechneten Stellgrößen zugeführt. Bei signifikanten Abweichungen zwischen den Modellausgangsgrößen und den zugeordneten gemessenen Istwerten der Regelgrößen wird ein Fehlerzustand erkannt.

Bei einem durch das Mikrorechnermodul RM in Ebene L₂ wie auch in Ebene L₃ erkannten Fehler werden die zugehörigen Freigabesignale g_{RV} bzw. g_{RH} für die Ansteuerung der jeweiligen Leistungselektronik LE_{LM} bzw. LE_{LRM} des Lenkmotors LM bzw. Lenkradmotors LRM zurückgesetzt.

### Ebene L₃

Diese Ebene ist im Mikrorechnermodul RM realisiert. Um die sichere Funktion des Steer-by-Wire-Lenksystems im Falle eines Rechner- oder Programmfehlers zu gewährleisten, müssen im Fehlerfall die Programme in Ebene L₁ und L₂ trotzdem noch ordnungsgemäß ablaufen oder der nicht ordnungsgemäße Ablauf muss sicher erkannt werden. Die Kontrolle erfolgt in der dargestellten Ausführungsvariante durch eine Frage-Antwort-Kommunikation der Ebenen L₃ und L₄. Das Mikrorechnersystem RM holt aus dem Überwachungsmodul ÜM eine Frage ab und beantwortet diese jeweils unter Berücksichtigung aller sicherheitsrelevanten Programmteile innerhalb eines vorgegebenen Zeitintervalls. Eine Frage kann nur dann richtig beantwortet werden, wenn ein fehlerfreier Ablauf der Programme für den Rechnerfunktionstest und den Befehlstest gegeben ist. Die aus den Teilprogrammen gebildeten Teilantworten werden zu einer Gesamtantwort zusammengefasst und der Ebene L₄ im Überwachungsmodul ÜM zugeführt.

### Ebene L₄

Diese Ebene ist im Überwachungsmodul ÜM realisiert. Hierin wird die vom Mikrorechner RM bereitgestellte Gesamtantwort hinsichtlich des Zeitintervalls des Eintreffens und auf bitgenaue Übereinstimmung mit der zur Frage passenden richtigen Antwort überprüft. Bei einem nicht ordnungsgemäßen Ablauf der Frage-Antwort Kommunikation in Ebene L₃ werden in der Überwachungskomponente ÜM die Freigabesignale g_{ÜV} bzw. g_{ÜH} für die Ansteuerung der Motoren, die Freigabesignale f_{ÜV} bzw. f_{ÜH} für die Ansteuerung der Motorrelais und das Ansteuersignal b_{ÜU} für das Umschaltventil zurückgesetzt.

### G: Maßnahmen zur Sensorüberwachung

Die Winkelsensorwerte (δ_{H1}, δ_{H2}) am Lenkrad werden zueinander auf Plausibilität geprüft. Zudem kann der Messwert des Momentensensors unter Einbeziehung der mechanischen Trägheiten des Lenkrades und eines mathematischen Modells für die Drehbewegung wie auch des aktuellen Reibwertes zur Überprüfung dieser Messwerte verwendet werden. Wird für den Lenkradmotor LRM ein BLDC-, ein Asynchron- oder ein Switched-Reluctance-Motor eingesetzt, so ist für die Regelung der Phasenströme ein Positionssensor mit Winkelbereich zwischen 0 und 360° erforderlich. Diese Sensorinformation kann zudem für die Überprüfung der gemessenen Lenkradwinkel genutzt werden, oder in einer vereinfachten Realisierungsvariante kann unter Einbeziehung dieser Positionsmessung ein Winkelsensor mit reduzierter Auflösung genutzt werden.

Der Momentenmesswert am Lenkrad kann unter Einbeziehung der gemessenen Phasenströme und der zur Motorüberwachung erforderlichen Temperaturmessgröße mittels eines mathematischen Modells auf Plausibilität überwacht werden.

Die Winkelsensorwerte (δ_{V1}, δ_{V2}) am Lenkmotor LM werden zueinander auf Plausibilität geprüft. Zudem können die gemessenen Messwerte des Lenkradwinkels (δ_{H1}, δ_{H2}) zur Lokalisierung des fehlerbehafteten Sensors bei Abweichungen zwischen den Sensorwerten δ_{V1} und δ_{V2} genutzt werden. Dies geschieht unter Einrechnung der momentanen Lenkübersetzung und Berücksichtigung eventuell auftretender fahrdynamischer Lenkeingriffe. Diese Fehlerlokalisierungsmaßnahme kann auch in umgekehrter Richtung zur Erkennung eines fehlerbehafteten Lenkradsensors genutzt werden. Wird für den Lenkmotor LM eine Asynchronmaschine oder ein Switched Reluctance Motor eingesetzt, so ist für die Regelung der Phasenströme ein Positionssensor mit Winkelbereich zwischen 0 und 360° erforderlich. Diese Sensorinformation kann zudem für die Überprüfung der gemessenen Lenkwinkels genutzt werden, oder in einer vereinfachten Realisierungsvariante kann unter Einbeziehung dieser Positionsmessung ein Winkelsensor mit reduzierter Auflösung genutzt werden. Der Momentenmesswert am Lenkmotor kann ebenfalls unter Einbeziehung der gemessenen Phasenströme und der zur Motorüberwachung erforderlichen Temperaturmessgröße mittels eines mathematischen Modells auf Plausibilität überwacht werden.

Vor Fahrtbeginn kann durch Aufschaltung eines definierten Sollmoments am Lenkradmotor die gesamte Funktionskette des Steer-by-Wire-Steuergeräts getestet werden.

### H: Besonderheiten der verschiedenen Ausführungsvarianten des Steuergeräts

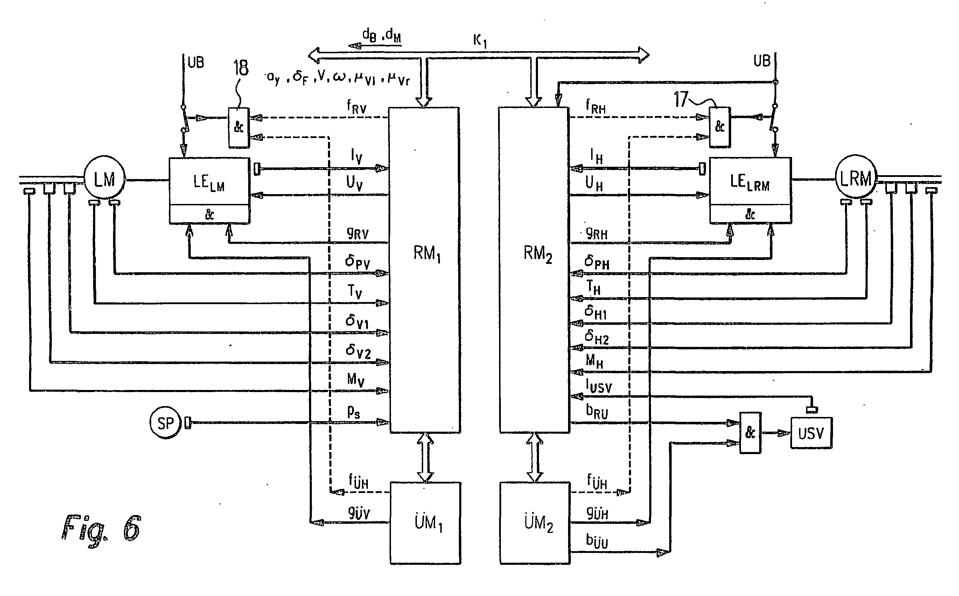

In der in Figur 6 dargestellten Ausführungsvariante erfolgt eine Aufteilung der zuvor dargestellten Funktionen auf zwei Mikrorechner RM₁ und RM₂. Der Mikrorechner RM₁ übernimmt dabei die Regelungs- und Überwachungsfunktionen des Lenkmotors LM und die Drucküberwachung der hydraulischen Rückfallebene. Der Mikrorechner RM₂ hat die Aufgabe, den Feedback-Aktuator LRM für das Lenkrad zu regeln und die Rückfallebene anzusteuern. Beide Komponenten können untereinander und mit anderen Rechnersystemen über das Kommunikationssystem K₁ Daten austauschen oder auch über einen in Figur 6 nicht dargestellten Pfad direkt miteinander kommunizieren. Die Funktionalität der beiden Rechnersysteme RM₁ und RM₂ wird entsprechend den Ausführungen in Abschnitt F (Struktur der Überwachung) durch die separaten Überwachungsmodule ÜM₁ bzw. UM₂ überprüft.

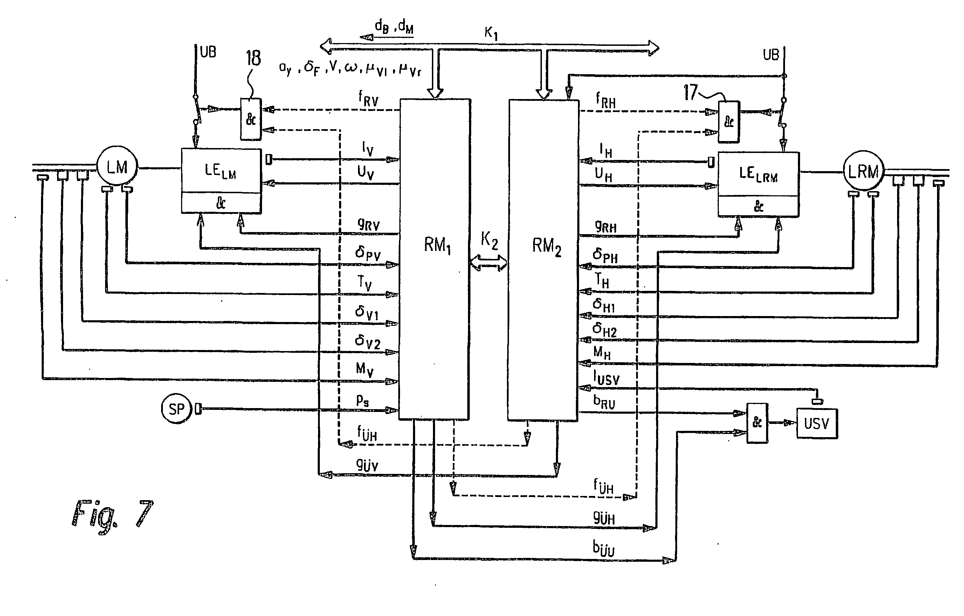

In der Realisierungsvariante gemäß Figur 7 erfolgt die Funktionsaufteilung des Steuergeräts wiederum auf zwei Mikrorechnersysteme RM₁, RM₂ entsprechend der Ausführungsvariante gemäß Figur 6. Ein zweites Kommunikationssystem K₂ erlaubt eine direkte Kommunikation zwischen beiden Mikrorechnersystemen RM₁, RM₂.

Die in Abschnitt F (Struktur der Überwachung) dargestellten Funktionen der Ebene der Überwachungskomponente werden jetzt von der jeweils benachbarten Rechnereinheit übernommen, d. h. RM₁ übernimmt die Überwachung der Komponente RM₂ und umgekehrt.

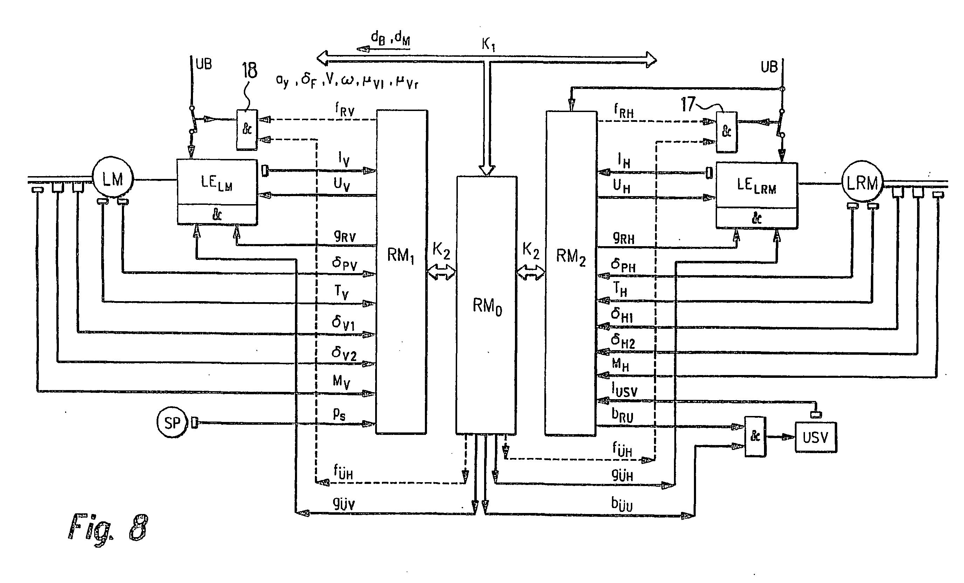

In der Ausführungsvariante gemäß Figur 8 erfolgt die Funktionsaufteilung der Steuergeräte auf drei Mikrorechnersysteme. Die Komponente RM₁ übernimmt dabei die Regelungs- und Überwachungsfunktionen des Lenkmotors und die Drucküberwachung der hydraulischen Rückfallebene. Die Komponente RM₂ hat die Aufgabe, den Feedback-Aktuator für das Lenkrad zu regeln und die Rückfallebene anzusteuern. Beide Komponenten können untereinander über das Kommunikationssystem K₂ Daten austauschen.

Die in Abschnitt F (Struktur der Überwachung) dargestellten Funktionen der Ebene der Überwachungskomponente werden jetzt von der Rechnereinheit RM₀ übernommen, die zusätzlich die Kommunikation mit anderen Rechnerkomponenten wahrnimmt.

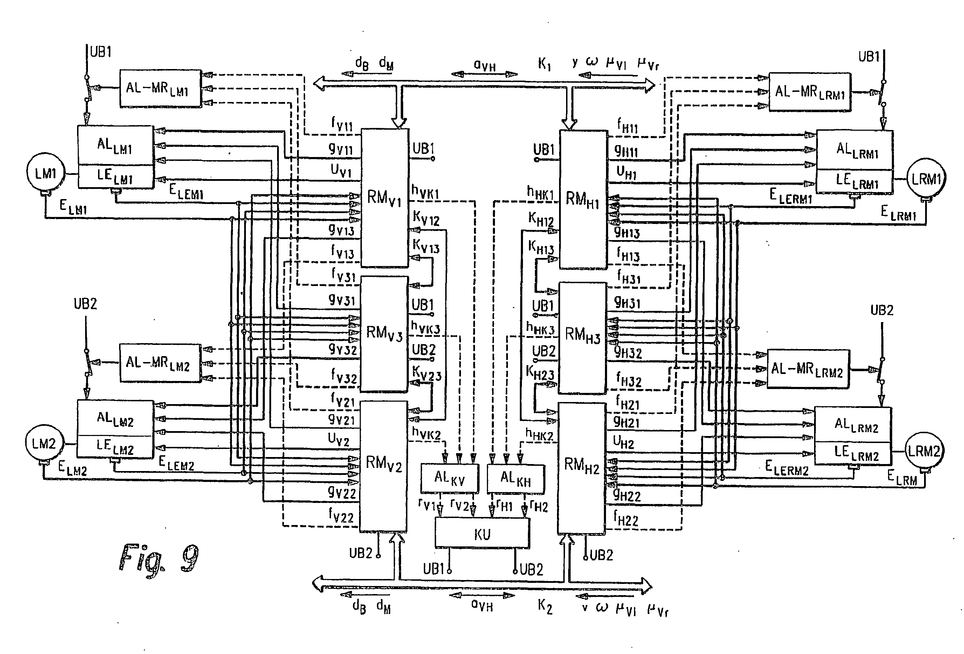

In Fig. 9 ist ein Ausführungsbeispiel eines erfindungsgemäßen Steer-by-Wire-Lenksystems mit sechs Mikrorechnern (RM_{H1}, ..., RM_{V3}) und mechanischer Rückfallebene dargestellt, bei der der Lenkradaktuator mit den beiden unabhängigen Elektromotoren LRM1 und LRM2 realisiert wird. In einer weiteren nicht dargestellten Variante könnten die beiden Elektromotoren auch mit einer gemeinsamen Antriebswelle und einem gemeinsamen Gehäuse ausgeführt sein, sodass lediglich die Motorspulen redundant ausgeführt sind. Diese Realisierungsvariante des Elektromotors kann auch beim Lenkmotor eingesetzt werden.

Die Mikrorechner RM_{H1}, RM_{H2} und RM_{H3} übernehmen die Steuer- und Regelfunktionen des Feedbackaktuators. Die Mikrorechner RM_{V1}, RM_{V2} und PM_{V3} bilden zusammen das redundante Rechnersystem zur Ansteuerung und Regelung des Feedbackaktuators. Die Mikrorechner RM_{Hi} des FeedbackAktuators tauschen über die Kommunikationsverbindungen K_{H12}, K_{H13} und K_{H23} ihre berechneten Daten aus. Dasselbe geschieht zwischen den Mikrorechnern RM_{Vi} des Lenkstellers mittels der Kommunikationverbindungen K_{V12}, K_{V13} und K_{V13}. Die dargestellten Mikrorechner RM_{Vi} bzw. RM_{Hi} beinhalten die zugehörigen Peripheriekomponenten für die Erfassung aller Sensorsignale. Zudem sind darin auch die erforderlichen Verarbeitungsfunktionen zur Berechnung der Ansteuersignale U_{H1} und U_{H2} für die Lenkradmotoren LRM bzw. U_{V1} und U_{V2} für die Ansteuerung des Lenkmotoren LM enthalten. In der dargestellten Realisierungsvariante ist der Feedbackaktuator durch zwei unabhängige Motoren LRM1 und LRM2 realisiert, die von unabhängigen Leistungselektronikeinheiten LE_{LRM1} bzw. LE_{LRM2} angesteuert werden. Beide Motoren wirken auf dieselbe Welle. Der Lenkaktuator ist durch die beiden Motoren LM1 und LM2 bzw. die zugeordneten Leistungselektronikeinheiten LE_{LM1} bzw. LE_{LM2} ebenfalls redundant aufgebaut. Die Energieversorgung der Elektronikkomponenten des SbW-Lenksystems erfolgt durch die unabhängigen Spannungsversorgungen UB1 bzw. UB2.

Von UB1 werden die Mikrorechnersysteme RM_{H1} und RM_{V1} sowie die Motoren LRM1 und LM1 samt der zugehörigen Leistungselektronik und Abschaltlogik (AL_{LRM1}, AL-MR_{LRM1}, AL_{LM1}, AL-MR_{LM1}) gespeist. Die Energiequelle UB2 versorgt die Mikrorechnersysteme RM_{H2} und RM_{V2} sowie die Motoren LRM2 und LM2 samt der zugehörigen Leistungselektronik und Abschaltlogik (AL_{LRM2}, AL-MR_{LRM2}, AL_{LM2}, AL-MR_{LM2}). Die Mikrorechner RM_{H3} und RM_{V3} sowie die elektromagnetische Kupplung KU werden von beiden Energiequellen gespeist.

K₁ und K₂ kennzeichnen jeweils ein unabhängiges Kommunikationssystem, z.B. realisiert mittels eines seriellen Busses, das die Kommunikation zwischen den Rechnerkomponenten RM_{Hi} für den Feedbackaktuator und den Komponenten RM_{Vi} für den Lenkungsaktuator ermöglicht. Die zwischen diesen Komponenten ausgetauschten Daten werden mit a_{VH} bezeichnet. Diese Kommunikationssysteme K₁ und K₂ ermöglichen zudem die Kommunikation zu weiteren Steuergeräten im Kfz.

In den Komponenten RM_{H1}, RM_{H2} und RM_{H3} sind folgende Funktionen implementiert:
- Sensorsignalerfassung und Berechnung der Ansteuersignale U_{H1} und U_{H2} für die Regelung der Lenkradmotoren LRM1 und LRM2.
- Austausch der berechneten Daten über die zwischen den Mikrorechnereinheiten wirkenden Kommunikationsverbindungen K_{H12}, K_{H13} und K_{H23}, Vergleich der Rechenergebnisse und gegebenenfalls Einleitung einer Rückfallstrategie
- Umschaltung auf die Rückfallebene
- Schnittstelle zu weiteren Steuergeräten bzw. Anzeigeeinheiten

In den Komponenten RM_{V1}, RM_{V2} und RM_{V3} sind folgende Funktionen realisiert:
- Sensorsignalerfassung und Berechnung der Ansteuersignale U_{V1} und U_{V2} für die Regelung des Lenkmotors LM1 und LM2.
- Austausch der berechneten Daten über die zwischen den Mikrorechnereinheiten wirkenden Kommunikationsverbindungen K_{V12}, K_{V13} und K_{V23}, Vergleich der Rechenergebnisse und gegebenenfalls Einleitung einer Rückfallstrategie
- Umschaltung auf die Rückfallebene
- Schnittstelle zu weiteren Steuergeräten bzw. Anzeigeeinheiten

Diese Funktionen werden im Folgenden beschrieben.

### A: Sensorsignalerfassung und Berechnung der Ansteuersignale für die Regelung des Lenkradmotors

Es werden die beim Ausführungsbeispiel gemäß Fig. 5 genannten Signale zur Ansteuerung der Lenkradmotoren LRM1 und LRM2 über periphere Erfassungskomponenten erfasst und den Mikrorechnersystemen RM_{H1}, RM_{H2} und RM_{H3} zugeführt. Redundant vorhandene Komponenten werden gesondert erfasst. Redundant vorhandene Sensoren geben je ein Signal ab. Im Folgenden wird durch die Indizierung auf die Redundanz von Komponenten und Sensoren hingewiesen.

Die erfassten Signale werden in Fig. 9 für den Motor LRM1 unter der Notation E_{LRM1} und für den Motor LRM2 unter der Bezeichnung E_{LRM2} zusammengefasst.

Für die Ansteuerung der Leistungselektronikeinheiten LE_{LRM1} bzw. LE_{LRM2} dienen primär die Ansteuersignale U_{H1} und U_{H2}. Eine Ansteuerung des Lenkradmotors LRM1 über die Leistungselektronik LE_{LRM1} erfolgt, falls eine Freigabe über die Abschaltlogik AL_{LRM1} ansteht und zudem das Motorrelais über die Abschaltlogik AL-MR_{LRM1} geschlossen ist. In entsprechender Weise erfolgt die Ansteuerung des Lenkradmotors LRM2 über die Leistungselektronik LE_{LRM2}, falls eine Freigabe über die Abschaltlogik AL_{LRM2} ansteht und zudem das Motorrelais über die Abschaltlogik AL-MR_{LRM2} geschlossen ist.

### B: Sensorsignalerfassung und Berechnung der Ansteuersignale für die Regelung der Lenkmotoren

Zur Ansteuerung der Lenkmotoren LM1 und LM2 werden die bezüglich das Ausführungsbeispiel gemäß Fig. 5 genannten Signale über periphere Erfassungskomponenten erfasst und den Mikrorechnersystemen RM_{V1}, RM_{V2} und RM_{V3} zugeführt.

Diese Signale werden in Fig. 9 für den Motor LM1 unter der Notation E_{LM1} und für den Motor LM2 unter der Bezeichnung E_{LM2} zusammengefasst.

Für die Ansteuerung der Leistungselektronikeinheiten LE_{LM1} bzw. LE_{LM2} dienen primär die Ansteuersignale U_{V1} und U_{V2}. Diese Ansteuersignale sind Stellgrößen eines digitalen Reglers und können z.B. als PWM-Signale ausgegeben werden. Die Stellgrößen U_{Vi} werden aus einem repräsentativen Wert der gemessenen Lenkradwinkeln δ_{H1} und δ_{H2} und der aktuellen Lenkübersetzung gebildet. Bezüglich Lenkeingriffen durch ein fahrdynamisches System gilt das bezüglich des Ausführungsbeispiels gemäß Fig. 5 gesagte entsprechend.

Eine Ansteuerung des Lenkmotors LM1 über die Leistungselektronik LE_{LM1} erfolgt, falls eine Freigabe über die Abschaltlogik AL_{LM1} ansteht und zudem das Motorrelais über die Abschaltlogik AL-MR_{LM1} geschlossen ist. In entsprechender Weise erfolgt die Ansteuerung des Lenkmotors LM2 über die Leistungselektronik LE_{LM2}, falls eine Freigabe über die Abschaltlogik AL_{LM2} ansteht und zudem das Motorrelais über die Abschaltlogik AL-MR_{LM2} geschlossen ist.

### C:4 Überwachung der Rückfallebene und Umschaltung auf die Rückfallebene

Wesentliche Kenngrößen der Verfügbarkeit der Rückfallebene des SbW-Lenksystems sind die Ströme in den beiden Spulen S₁ und S₂ der Kupplung. Diese Ströme werden fortlaufend erfasst. Zur Überprüfung der Funktion des Übergangs zur mechanischen Rückfallebene werden während des Fahrbetriebes abwechselnd die Stromkreise der Kupplungsspulen durch die Signale r_{V1} und r_{V2} bzw. r_{H1} und r_{H2} unterbrochen. Ein Übergang in die mechanische Rückfallebene ist möglich, wenn dabei die zugehörigen Spulenströme jeweils auf den Wert Null zurückgehen.

### D: Schnittstelle zu weiteren Steuergeräten bzw. Anzeigeeinheiten

Es gilt das bezüglich des Ausführungsbeispiels gemäß Fig. 5 gesagte entsprechend.

### E: Sicherheitsmaßnahmen im Steuergerät

Die zur Einhaltung der an dieses System gestellten Sicherheitsanforderungen erforderlichen Maßnahmen entsprechen den in der Beschreibung der Fig. 5 unter "E" beschriebenen Maßnahmen. Zum Erreichen dieser Sicherheitsanforderungen ist folgendes vorgesehen:

Alle an den beiden Motoren LRM1 und LRM2 auftretenden Messsignale E_{LRM1} und E_{LRM2} wie auch alle Messsignale E_{LERM1} und E_{LERM2} der Leistungselektronik LE_{LRM1} und LE_{LRM2} werden in den drei Rechnermodulen RM_{H1}, PM_{H2} und RM_{H3} erfasst. Die erfassten Messsignale werden über die Rechnerkopplungen K_{H12}, K_{H13} und K_{H23} untereinander ausgetauscht und untereinander auf Plausibilität verglichen. Für jede Messgröße wird dann ein Referenzwert z.B. durch eine 2 aus 3 Majoritätsauswahl gebildet. Durch dieses Vorgehen lässt sich ein defekter Eingangskanal einer Messgröße eindeutig lokalisieren. Ein fehlerhafter Eingangskanal wird von den weiteren Berechnungen ausgeschlossen. Gleichzeitig wird dieser Fehler in einem Fehlerspeicher abgelegt. Mit diesen Referenzwerten der einzelnen Messgrößen werden dann in allen drei Rechnermodulen die weiteren Berechnungen durchgeführt bzw. dieser Referenzwert wird über die Kommunikationssysteme K₁ und K₂ als Kommunikationsdatum a_{VH} den Rechnermodulen RM_{V1}, RM_{V2} bzw. RM_{V3} des Lenkaktuators bereitgestellt.

Die Berechnungen zur Bildung der Ansteuersignale U_{H1} bzw. U_{H2} für die Lenkradmotoren LRM1 und LRM2 werden ebenfalls in allen Mikrorechnersystemen RM_{H1}, RM_{H2} und RM_{H3} redundant durchgeführt. Die Ergebnisse werden wiederum über die Kopplungspfade K_{H12}, K_{H13} und K_{H23} untereinander ausgetauscht und zueinander auf Plausibilität überprüft.
Die Vorgehensweise einer Realisierungsvariante zur Einleitung der Abschaltstrategie wird am Beispiel der Berechnung des Ansteuersignals U_{H1} erläutert. Die in den Mikrorechnersystemen RM_{H1}, RM_{H2} und RM_{H3} berechneten Ergebnisse werden mit U_{H11}, UH₁₂ und UH₁₃ bezeichnet. Wird beim Vergleich dieser Ergebnisse in der Rechnereinheit RM_{H1} ein Fehler in U_{H11} lokalisiert, der auch nach Ablauf einer Fehlertoleranzzeit weiterhin ansteht, so werden die Enable-Signale für die Leistungselektronik g_{H11} und für das Motorrelais f_{H11} disabled und zudem das Enable-Signal zur Kupplungsansteuerung h_{HK1} zurückgesetzt. Wird beim Vergleich der Rechenergebnisse U_{H11}, U_{H12} und U_{H13} in den Rechnereinheiten RM_{H3} bzw. RM_{H2} Fehler in U_{H11} lokalisiert, so werden entsprechend die Enable-Signale g_{H31}, f_{H31} und h_{HK3} bzw. g_{H21}, f_{H21} und h_{HK2} zurückgesetzt.

Eine Freischaltung der Ansteuersignale U_{H1} und U_{H2} erfolgt erst, wenn innerhalb der Abschaltlogikeinheiten für die Leistungselektronik der Lenkradmotoren AL_{LRM1} bzw. AL_{LRM2} jeweils die Freigabesignale m_{H1} bzw. m_{H2} anstehen.

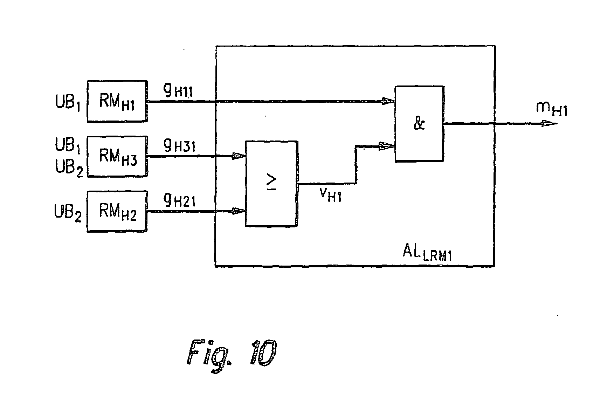

Die logische Schaltung zur Bildung der Freigabesignale zur Aktivierung des Ansteuersignales U_{H1} ist beispielhaft für das Freigabesignal m_{H1} für die Leistungselektronik des Lenkradmotors LE_{LRM1} in Fig. 10 dargestellt. Damit wird sichergestellt, dass ein Fehler, der bei der Berechnung von U_{H1} in RN_{H1} aufgetreten ist, bei Erkennung durch das Rechnersystem RM_{H1} unmittelbar zur Abschaltung der Leistungselektronik LE_{LRM1} führt bzw. durch die gemeinsame Erkennung dieses Fehlers durch die Module RM_{H2} und RM_{H3} indirekt eine Abschaltung dieser Leistungselektronik einleitet. Die Enable-Signale können statisch realisiert sein, die Funktion des Schaltüberganges wird dann durch Rücklesen überwacht. Es können dazu diese Enablesignale in Testphasen zyklisch gesetzt und rückgesetzt werden.
Eine weitere Realisierungsvariante ergibt sich durch eine dynamische Ansteuerung der Enablesignale.

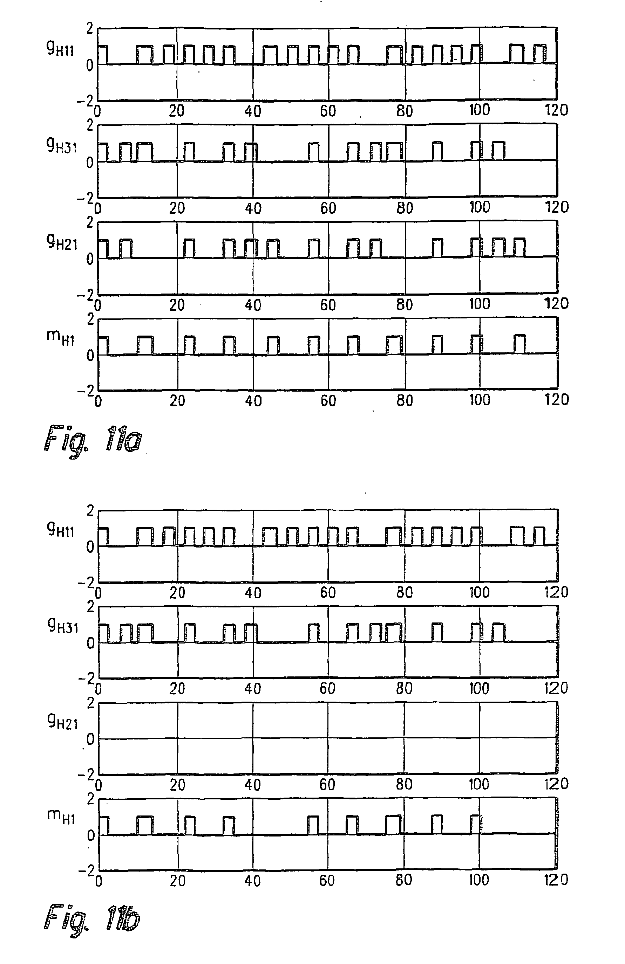

In Fig. 11a) ist der zeitliche Verlauf der Signale g_{H11}, g_{H31} und g_{H21} eines solchen Verfahrens bei einem fehlerfreien Betrieb dargestellt. Das daraus resultierende Freigabesignal m_{H1} kann in seiner korrekten zeitlichen Abfolge durch eine Watchdog-Einheit überwacht werden.

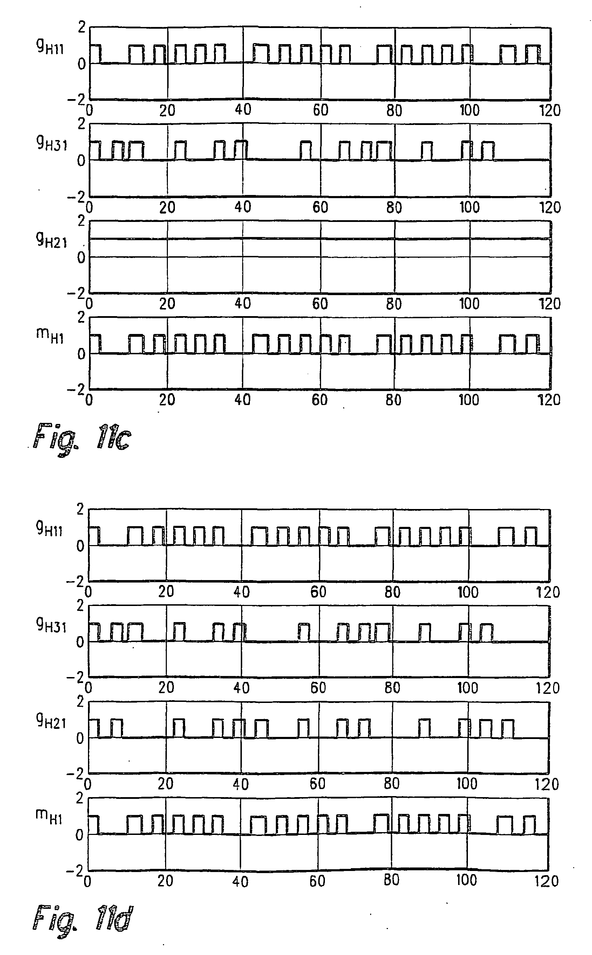

In den Fig. 11b) bis 11d) sind potentielle Fehler in den Enable-Signalen und ihre Auswirkung auf das Freigabesignal m_{H1} dargestellt. In Fig. 11b) ist das Signal g_{H21} auf dem Low-Wert festgehalten und in Fig. 11c) auf dem High-Wert. In Fig. 11d) ist die Fehlerauswirkung dargestellt, die aus einem Einfrieren des Zwischensignales v_{H1} auf dem High-Signal resultiert.

Die Ansteuerung der Abschaltlogik für das Motorrelais AL-MR_{LRM1} kann mit einer entsprechend zu Fig. 10 aufgebauten Schaltung erfolgen. Anstelle der Enable-Signale Signale g_{H11}, g_{H31} und g_{H21} sind hierbei die Enable-Signale Signale f_{H11}, f_{H31} und f_{H21} zu verwenden.

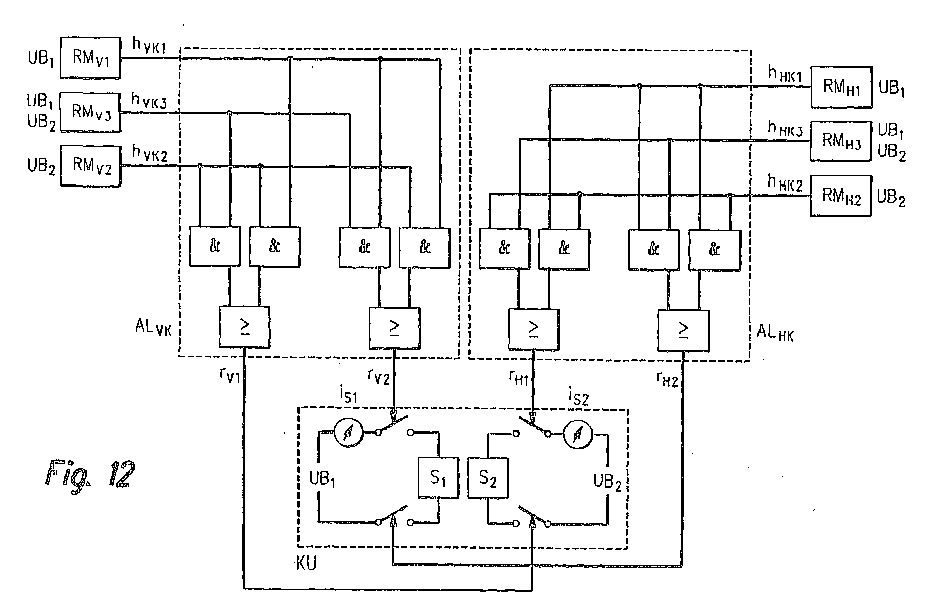

Die Ansteuerung der Kupplungseinheit erfolgt mit einer Realisierungsvariante einer Schaltung gemäß Fig. 12. Da die Kupplung jeweils alleine durch die Bestromung der Spulen S₁ bzw. S₂ in einem geöffneten Zustand (SbW-Betrieb) gehalten werden kann, wird hiermit sichergestellt, dass ein einzelner Fehler nicht zum sofortigen Übergang in die mechanische Rückfallebene führen kann. Jeder Einzelfehler führt über die Enable-Signale r_{V1}, r_{V2}, r_{H1} und r_{H2} jeweils nur zu einer Unterbrechung der Spulenstromkreise. Um die korrekte Funktion im Fehlerfall sicherzustellen, werden in zyklischen Testphasen während des Fahrbetriebes die einzelnen Schalter in den Zustand Öffnen gesteuert. Durch Überwachung des Verlaufes der Ströme i_{S1} bzw. i_{S2} kann damit die Fähigkeit zum Öffnen getestet werden.

Dies Maßnahmen können entsprechend auch für die Feedback-Aktuaktorik angewandt werden.

Die zuvor beschriebenen Steuergerätestrukturen sind auch für Steer-by-Wire-Lenksysteme gemäß Fig. 1a geeignet. Es entfällt lediglich die bei der hydraulischen Rückfallebene erforderliche Überwachung des Speicherdruckes. Das in diesen Strukturen dargestellte Umschaltventil USV ist hier jedoch durch eine Kupplungsansteuerung zu ersetzen. Die hierfür erforderlichen Ansteuersignale g_{ÜH} und g_{ÜU} werden entsprechend den Ausführungen für die hydraulische Rückfallebene im Fehlerfall erzeugt, so dass bei Auftreten von Fehlern eine sichere Umschaltung auf die mechanische Rückfallebene mit direktem Lenkdurchgriff gegeben ist.

## Patentansprüche

1. Verfahren zum Betreiben eines Steuergeräts für eine Steer-by-Wire-Lenksystem eines Fahrzeugs, bei dem folgende, mindestens teilweise redundant ausgeführten Verfahrensschritte ausgeführt werden:
- Erfassen der Eingangssignale Lenkradwinkel (δ_{H}, δ_{H1}, δ_{H2}), Lenkwinkel (δ_{V}, δ_{V1}, δ_{V2}), auf die gelenkten Räder wirkendes Rückstellmoment (M_{V}, M_{V1}, M_{V2}), von einem Feeedback-Aktuator (LRM, LRM₁, LRM₂) auf eine Lenkhandhabe übertragenes Moment (M_{H}, M_{H1}, M_{H2}),
- Überwachen der erfassten Eingangssignale durch Plausibilitätsprüfungen und/oder analytische Redundanz;
- Ansteuern mindestens eines auf die gelenkten Räder des Fahrzeugs wirkenden Lenkstellers (LM, LMᵥₗ, LMᵥᵣ) in Abhängigkeit des Lenkradwinkels (δ_{H});
- Ansteuern mindestens eines auf ein Lenkrad wirkenden FeedbackAktuators (LRM₁, LRM₁) in Abhängigkeit des Rückstellmoments (M_{V}, M_{V1}, M_{V2});
- Kommunizieren mit anderen Steuergeräten oder Sensoren (10, 13, 14) des Fahrzeugs;
- Überwachen der Funktionen des Steuergeräts und der Verfügbarkeit einer Rückfallebene sowie einer Einrichtung (KU, USV) zum Aktivieren der Rückfallebene;
- Umschalten von der Steer-by-Wire-Lenkung auf die Rückfallebene bei Auftreten eines Fehlers in der Steer-by-Wire-Lenkung,
**dadurch gekennzeichnet, dass** zur Überwachung der Funktionen des Steuergeräts und der Verfügbarkeit der Rückfallebene vier Logikebenen (L₁, L₂, L₃, L₄) vorgesehen sind.

2. Verfahren nach Anspruch 1, **dadurch gekennzeichnet, dass** der Lenkradwinkel (δ_{H}) von mindestens einem Lenkradwinkelsensor (10) ermittelt wird.

3. Verfahren nach Anspruch 1 oder 2, **dadurch gekennzeichnet, dass** der Lenkwinkel (δ_{V}) von mindestens einem Lenkwinkelsensor ermittelt wird.

4. Verfahren nach einem der vorhergehenden Ansprüche, **dadurch gekennzeichnet, dass** das Rückstellmoment (M_{V}, M_{V1}, M_{V2}) durch mindestens einen Rückstellmomentensensor (14), durch ein Rechenmodell des Fahrzeugs in Abhängigkeit fahrdymamischer Größen (v, ω, δ_{H}) und/oder den Phasenströmen (I_{V}) mindestens eines elektromotorisch betätigten Lenkstellers (LM, LMᵥₗ, LMᵥᵣ) erfasst wird.

5. Verfahren nach einem der vorhergehenden Ansprüche, **dadurch gekennzeichnet, dass** der oder die Lenksteller (LM, LMᵥₗ, LMᵥᵣ) über Steuersignale (U_{V}) für die Phasenströme und mindestens ein enable-Signal (g_{RV}, g_{ÜV}, g_{V11}, g_{V21}, g_{V31}) angesteuert werden.

6. Verfahren nach einem der vorhergehenden Ansprüche, **dadurch gekennzeichnet, dass** das von dem Feedback-Aktuator (LRM, LRM₁, LRM₂) auf das Lenkrad übertragene Handmoment (M_{H}) aus dem Lenkradwinkel (δ_{H}) und/oder den Phasenströmen (I_{H}) des oder der Lenkradmotoren (LRM, LRM₁, LRM₁) bestimmt wird.

7. Verfahren nach einem der vorhergehenden Ansprüche, **dadurch gekennzeichnet, dass** der oder die Lenkmotoren (LM₁, LM₂) über Steuersignale (U_{V}) für die Phasenströme und mindestens ein enable-Signal (g_{RH}, g_{ÜH}, g_{H11}, g_{H21}, g_{H31}) angesteuert werden.

8. Verfahren nach einem der vorhergehenden Ansprüche, **dadurch gekennzeichnet, dass** der oder die Lenkmotoren (LM₁, LM₂) und/oder der oder die Lenkradmotoren (LRM₁, LRM₂) durch eine enable-Schaltung über ein Motorrelais angesteuert werden.

9. Verfahren nach einem der vorhergehenden Ansprüche, **dadurch gekennzeichnet, dass** die Kommunikation (K₁, K₂) mit anderen Steuergeräten oder Sensoren (10, 13, 14) des Fahrzeugs redundant erfolgt.

10. Verfahren nach einem der vorhergehenden Ansprüche, **dadurch gekennzeichnet, dass** das Umschalten vom Steer-by-Wire-Betrieb auf die Rückfallebene erst nach Ablauf einer Übergangszeit nach dem Auftreten eines Fehlers erfolgt.

11. Verfahren nach einem der vorhergehenden Ansprüche, **dadurch gekennzeichnet, dass** die Rotorpositionen (δ_{PH}, δ_{PV}) des oder der Lenkradmotoren (LRM, LRM₁, LRM₂) und/oder des oder der Lenkmotoren (LM, LMᵥₗ, LMᵥᵣ) erfasst werden.

12. Verfahren nach einem der vorhergehenden Ansprüche, **dadurch gekennzeichnet, dass** der Druck (pₛ) eines Druckspeichers der hydraulischen Rückfallebene überwacht wird.

13. Verfahren nach einem der vorhergehenden Ansprüche, **dadurch gekennzeichnet, dass** die Klemmenspannung (UB) oder die Klemmenspannungen (UB₁, UB₂) des oder der Spannungsquellen des Steer-by-Wire-Lenksystems erfasst und bei der Berechnung der Stellgrößen berücksichtigt werden.

14. Verfahren nach einem der vorhergehenden Ansprüche, **dadurch gekennzeichnet, dass** in der ersten Logikebene (L₁)
- Plaüsibilitätsüberprüfungen der Eingangssignale;
- Auswahl der für die Verarbeitung erforderlichen Lenkradwinkel (δ_{H}) und Lenkwinkel (δ_{V}) aus den jeweils redundant vorliegenden Signalen,
- Berechnung der Regelfunktionen für die Ansteuerung des oder der Lenkradmotoren (LRM, LRM₁, LRM₂) und des oder der Lenkmotoren (LM, LM₁, LM₂),
- Änderung der Ansteuerung der Einrichtung (KU, USV) zum Aktivieren der Rückfallebene im Fehlerfall.

15. Verfahren nach einem der vorhergehenden Ansprüche, **dadurch gekennzeichnet, dass** in der zweiten Logikebene (L₂) die in der Logikebene L₁ durchgeführten Berechnungen mittels diversitärer Algorithmen überprüft werden.

16. Verfahren nach einem der vorhergehenden Ansprüche, **dadurch gekennzeichnet, dass** in der dritten Logikebene (L₃)
vom Überwachungsmodul (ÜM) eine Frage abgeholt und unter Berücksichtigung aller sicherheitsrelevanten Programmteile innerhalb eines vorgegebenen Zeitintervalls beantwortet wird, und dass beim Auftreten eines durch die Logikebenen L₂ und L₃ erkannten Fehlers die Freigabesignale (g_{RV}, g_{RH}, m_{H1}, m_{H2}) für die Ansteuerung der Leistungselektronik LE_{LM} bzw. LE_{LRM} des Lenkmotors LM bzw. Lenkradmotors LRM zurückgesetzt.

17. Verfahren nach einem der vorhergehenden Ansprüche, **dadurch gekennzeichnet, dass** in der vierten Logikebene (L₄)
die Antwort der dritten Logikebene hinsichtlich bitgenauer Übereinstimmung und Antwortzeit überprüft wird, und dass bei einem nicht ordnungsgemäßen Ablauf der Frage-Antwort-Kommunikation mit der Logikebene L₃ die Freigabesignale g_{ÜV} bzw. g_{ÜH} für die Ansteuerung der Motoren, die Freigabesignale f_{ÜV} bzw. f_{ÜH} für die Ansteuerung des ersten und zweiten Motorrelais (17, 18) und das Ansteuersignal (b_{ÜU}) für die Leistungselektronik (LE_{LM}, LE_{LRM}) des Lenkmotors (LM) und/oder des Lenkradmotors (LRM) zurückgesetzt wird.

18. Computerprogramm, **dadurch gekennzeichnet, dass** es alle Schritte eines Verfahrens nach einem der vorhergehenden Ansprüche ausführt, wenn es abgearbeitet wird.

19. Speichermedium, **dadurch gekennzeichnet, dass** ein Computerprogramm nach Anspruch 19 auf dem Speichermedium abgespeichert ist.

20. Steuergerät zum Steuern eines Steer-by-Wire-Lenksystems, **dadurch gekennzeichnet, dass** das Steuergerät alle Schritte eines ein Verfahrens nach einem der Ansprüche 1 bis 17 ausführt.

21. Steuergerät nach Anspruch 20, **dadurch gekennzeichnet, dass** das Steuergerät mindestens einen Mikrorechner (RM, RM₀, RM₁, RM₂, RM_{H1}, RM_{H2}, RM_{H3}, RM_{V1}, RM_{V2}, RM_{V3}) und/oder mindestens ein Überwachungsmodul (ÜM, ÜM₁, ÜM₂, ÜM₃) aufweist.

22. Steuergerät nach Anspruch 21, **dadurch gekennzeichnet, dass** der mindestens eine Mikrorechner (RM, RM₀, RM₁, RM₂, RM_{H1}, RM_{H2}, RM_{H3}, RM_{V1}, RM_{V2}, RM_{V3}) die Aufgaben der ersten zweiten und dritten Logikebene (L₁, L₂, L₃) übernimmt, und dass das mindestens eine Überwachungsmodul (ÜM, ÜM₁, ÜM₂, ÜM₃) die Aufgaben der vierten Logikebene (L₄) übernimmt.

23. Steuergerät nach Anspruch 21, **dadurch gekennzeichnet, dass** sich die Mikrorechner (RM, RM₀, RM₁, RM₂, RM_{H1}, RM_{H2}, PM_{H3}, RM_{V1}, RM_{V2}, RM_{V3}) gegenseitig kontrollieren, und dass mindestens ein Mikrorechner die Aufgaben vierten Logikebene (L₄) übernimmt.

24. Steuergerät nach einem der Ansprüche 20 bis 23, **dadurch gekennzeichnet, dass** das Steuergerät den oder die Lenkrad-Steller (LRM) und/oder den oder die Lenksteller (LRM₁, LRM₂) über je eine Leistungselektronik (LE_{LM1}, LE_{LM2}, LE_{LRM1}, LE_{LRM2}) ansteuert.

25. Steer-by-Wire-Lenksystem für ein Fahrzeug mit einem auf ein Lenkrad wirkenden Feedback-Aktuator (LRM), mit einem Lenkradwinkelerfassung (10), mit einer Handmomentenerfassung (13), mit einem Lenksteller (LRM), mit einer Lenkwinkelerfassung, mit einer Rückstellmomenterfassung (14), mit einer Kommunikationseinrichtung (K) und mit einem Steuergerät, **dadurch gekennzeichnet, dass** das Steuergerät ein Steuergerät nach einem der Ansprüche 20 bis 24 ist, und dass das Steer-by-Wire-Lenksystem redundant aufgebaut ist.

26. Steer-by-Wire-Lenksystem nach Anspruch 25, **dadurch gekennzeichnet, dass** je eine Leistungselektronik (LE_{LM1}, LE_{LM2}, LE_{LRM1}, LE_{LRM2}) zum Ansteuern des oder der Feedback-Aktuatoren (LRM₁, LRM₂) und/oder des oder der Lenksteller (LM₁, LM₂) vorhanden ist.

## Claims

1. Method for operating a control unit for a steer-by-wire steering system of a vehicle in which the following, at least partially redundantly embodied method steps, are carried out:
- detection of the input signals for the steering wheel angle (δ_{H}, δ_{H1}, δ_{H2}), steering angle (δ_{V}, δ_{V1}, δ_{V2}), restoring torque (M_{V}, M_{V1}, M_{V2}) which acts on the steered wheels, torque (M_{H}, M_{H1}, M_{H2}) which is transmitted to a steering handle by a feedback actuator (LRM, LRM₁, LRM₂),
- monitoring of the detected input signals by plausibility checks and/or analytical redundancy;
- actuation of at least one steering actuator (LM, LMᵥₗ, LMᵥᵣ) which acts on the steered wheels of the vehicle, as a function of the steering wheel angle (δ_{H});
- actuation of at least one feedback actuator (LRM₁, LRM₂) which acts on a steering wheel, as a function of the restoring torque (M_{V}, M_{V1}, M_{V2});
- communication with other control units or sensors (10, 13, 14) of the vehicle;
- monitoring of the functions of the control unit and of the availability of a fall back level as well as of a device (KU, USV) for activating the fall back level;
- switching over from the steer-by-wire steering to the fall back level when a fault occurs in the steer-by-wire steering,
**characterized in that** four logic levels (L₁, L₂, L₃, L₄) are provided for monitoring the functions of the control unit and the availability of the fall back level.

2. Method according to Claim 1, **characterized in that** the steering wheel angle (δ_{H}) is determined by at least one steering wheel angle sensor (10).

3. Method according to Claim 1 or 2, **characterized in that** the steering angle (δ_{V}) is determined by at least one steering angle sensor.

4. Method according to one of the preceding claims, **characterized in that** the restoring torque (M_{V}, M_{V1}, M_{V2}) is detected by at least one restoring torque sensor (14), by a computational model of the vehicle as a function of vehicle movement dynamics variables (v, ω, δ_{H}) and/or the phase currents (I_{V}) of at least one steering actuator (LM, LMᵥₗ, LMᵥᵣ) which is activated by a electric motor.

5. Method according to one of the preceding claims, **characterized in that** the steering actuator or actuators (LM, LMᵥₗ, LMᵥᵣ) is/are actuated by means of control signals (U_{V}) for the phase currents and at least one enable signal (g_{RV}, g_{ÜV}, g_{V11}, g_{V21}, g_{V31}).

6. Method according to one of the preceding claims, **characterized in that** the manual torque (M_{H}) which is transmitted by the feedback actuator (LRM, LRM₁, LRM₂) to the steering wheel is determined from the steering wheel angle (δ_{H}) and/or the phase currents (I_{H}) of the steering wheel motor or motors (LRM, LRM₁, LRM₂).

7. Method according to one of the preceding claims, **characterized in that** the steering motor or motors (LM₁, LM₂) are actuated by means of control signals (U_{V}) for the phase currents and at least one enable signal (g_{RH}, g_{ÜH}, g_{H11}, g_{H21}, g_{H31}).

8. Method according to one of the preceding claims, **characterized in that** the steering motor or motors (LM₁, LM₂) and/or the steering wheel motor or motors (LRM₁, LRM₂) are actuated by an enable circuit via a motor relay.

9. Method according to one of the preceding claims, **characterized in that** the communication (K₁, K₂) with other control units or sensors (10, 13, 14) of the vehicle takes place redundantly.

10. Method according to one of the preceding claims, **characterized in that** the switching over from the steer-by-wire operating mode to the fall back level does not take place until after a transition time after the occurrence of a fault has expired.

11. Method according to one of the preceding claims, **characterized in that** the rotor positions (δ_{PH}, δ_{PV}) of the steering wheel motor or motors (LRM, LRM₁, LRM₂) and/or of the steering motor or motors (LM, LM₁, LM₂) are detected.

12. Method according to one of the preceding claims, **characterized in that** the pressure (pₛ) of a pressure store of the hydraulic fall back level is monitored.

13. Method according to one of the preceding claims, **characterized in that** the terminal voltage (UB) or the terminal voltages (UB₁, UB₂) of the voltage source or sources of the steer-by-wire steering system is/are detected and taken into account in the calculation of the actuating variables.

14. Method according to one of the preceding claims, **characterized in that**, in the first logic level (L₁):
- plausibility checks of the input signals;
- selection of the steering wheel angles (δ_{H}) and steering angles (δ_{V}), which are necessary for the processing, from the respectively the redundantly present signals,
- calculation of the control functions for the actuation of the steering wheel motor or motors (LRM, LRM₁, LRM₂) and of the steering motor or motors (LM, LM₁, LM₂), and
- changing of the actuation of the device (KU, USV) to activation of the fall back level in the event of a fault.

15. Method according to one of the preceding claims, **characterized in that**, in the second logic level (L₂), the calculations which are carried out in the logic level L₁ are checked by means of various algorithms.

16. Method according to one of the preceding claims, **characterized in that**, in the third logic level (L₃), a request is retrieved by the monitoring module (ÜM) and is responded to taking into account all the safety-related program parts within a predefined time interval, and **in that** when a fault which is detected by the logic levels L₂ and L₃ occurs, the enable signals (g_{RV}, g_{RH}, m_{H1}, m_{H2}) for the actuation of the power electronics systems LE_{LM} and LE_{LRM} of the steering motor LM and of the steering wheel motor LRM, respectively, are reset.

17. Method according to one of the preceding claims, **characterized in that**, in the fourth logic level (L₄), the response of the third logic level is checked in terms of bit-precise correspondence and response time, and **in that**, in the event of unsatisfactory sequencing of the request/response communication with the logic level L₃, the enable signals g_{ÜV} and g_{ÜH} for the actuation of the motors, the enable signals f_{ÜV} and f_{ÜH} for the actuation of the first and second motor relays (17, 18) and the actuation signal (b_{ÜU}) for the power electronics systems (LE_{LM}, LE_{LRM}) of the steering motor (LM) and/or of the steering wheel motor (LRM) are reset.

18. Computer program, **characterized in that** it carries out all the steps of a method according to one of the preceding claims when it is run.

19. Storage medium, **characterized in that** a computer program according to Claim 18 is stored on the storage medium.

20. Control unit for controlling a steer-by-wire steering system, **characterized in that** the control unit carries out all the steps of a method according to one of Claims 1 to 17.

21. Control unit according to Claim 20, **characterized in that** the control unit has at least one microcomputer (RM, RM₀, RM₁, RM₂, RM_{H1}, RM_{H2}, RM_{H3}, RM_{V1}, RM_{V2}, RM_{V3}) and/or at least one monitoring module (ÜM, ÜM₁, ÜM₂, ÜM₃).

22. Control unit according to Claim 21, **characterized in that** the at least one microcomputer (RM, RM₀, RM₁, RM₂, RM_{H1}, RM_{H2}, RM_{H3}, RM_{V1}, RM_{V2}, RM_{V3}) performs the functions of the first, second and third logic level, (L₁, L₂, L₃), and **in that** the at least one monitoring module (ÜM, ÜM₁, ÜM₂, ÜM₃) performs the functions of the fourth logic level (L₄).

23. Control unit according to Claim 21, **characterized in that** the microcomputers (RM, RM₀, RM₁, RM₂, RM_{H1}, RM_{H2}, RM_{H3}, RM_{V1}, RM_{V2}, RM_{V3}) monitor one another, and **in that** at least one microcomputer performs the functions of the fourth logic level (L₄).

24. Control unit according to one of Claims 20 to 23, **characterized in that** the control unit actuates the steering wheel actuator or actuators (LRM) and/or the steering actuator or actuators (LRM₁, LRM₂) by means of a power electronics system (LE_{LM1}, LE_{LM2}, LE_{LRM1}, LE_{LRM2}) in each case.

25. Steer-by-wire steering system for a vehicle having a feedback actuator (LRM) which acts on a steering wheel, having a steering wheel angle detection means (10), having a manual torque detection means (13), having a steering actuator (LRM), having a steering angle detection means, having a restoring torque detection means (14), having a communication device (K) and having a control unit, **characterized in that** the control unit is a control unit according to one of Claims 20 to 24, and **in that** the steer-by-wire steering system is of redundant design.

26. Steer-by-wire steering system according to Claim 25, **characterized in that** in each case a power electronics system (LE_{LM1}, L_{EM2}, LE_{LRM1}, LE_{LRM2}) is present for actuating the feedback actuator or actuators (LRM₁, LRM₂) and/or the steering actuator or actuators (LM₁, LM₂).

## Revendications

1. Procédé de fonctionnement d'un module de commande pour un système de direction filo-commandée d'un véhicule, selon lequel les étapes suivantes sont exécutée avec une redondance au moins partielle :
- Acquisition des signaux d'entrée angle du volant (δ_{H}, δ_{H1}, δ_{H2}), angle de direction (δ_{V}, δ_{V1}, δ_{V2}), moment de rappel (M_{V}, M_{V1}, M_{V2}) agissant sur les roues orientables, moment (M_{H}, M_{H1}, M_{H2}) transmis sur une manette de direction par un actionneur de contre-réaction (LRM, LRM₁, LRM₂) ;
- Surveillance des signaux d'entrée acquis par des contrôles de plausibilité et/ou redondance analytique ;
- Commande d'au moins un actionneur de direction (LM, LMᵥₗ, LMᵥᵣ) agissant sur les roues orientables du véhicule en fonction de l'angle de volant (δ_{H}) ;
- Commande d'au moins un actionneur de contre-réaction (LRM₁, LRM₂) agissant sur le volant en fonction du moment de rappel (M_{V}, M_{V1}, M_{V2});
- Communication avec d'autres modules de commande ou capteurs (10, 13, 14) du véhicule ;
- Surveillance des fonctions du module de commande et de la disponibilité d'un mode dégradé ainsi que d'un dispositif (KU, USV) pour activer le mode dégradé ;
- Basculement de la direction filo-commandée en mode dégradé lorsqu'il se produit un défaut dans la direction filo-commandée ;
**caractérisé en ce que** quatre niveaux logiques (L₁, L₂, L₃, L₄) sont prévus pour surveiller les fonctions du module de commande et la disponibilité du mode dégradé.

2. Procédé selon la revendication 1, **caractérisé en ce que** l'angle de volant (δ_{H}) est déterminé par au moins un détecteur d'angle de volant (10).

3. Procédé selon la revendication 1 ou 2, **caractérisé en ce que** l'angle de direction (δᵥ) est déterminé par au moins un détecteur d'angle de direction.

4. Procédé selon l'une des revendications précédentes, **caractérisé en ce que** le moment de rappel (M_{V}, M_{V1}, M_{V2}) est détecté par au moins un détecteur de moment de rappel (14), par un modèle de calcul du véhicule en fonction de grandeurs dynamiques de conduite (V, ω, δ_{H}) et/ou des courants de phase (I_{V}) d'au moins un actionneur de direction (LM, LMᵥₗ, LMᵥᵣ) à commande électromotorisée.

5. Procédé selon l'une des revendications précédentes, **caractérisé en ce que** le ou les actionneurs de direction (LM, LMᵥₗ, LMᵥᵣ) sont commandés par le biais de signaux de commande (Uᵥ) pour les courants de phase et au moins un signal de validation (g_{RV} , g_{ÜV}, g_{V11}, g_{V21}, g_{V31}).

6. Procédé selon l'une des revendications précédentes, **caractérisé en ce que** le moment manuel (M_{H}) transmis au volant par l'actionneur de contre-réaction (LRM, LRM₁, LRM₂) est déterminé à partir de l'angle de volant (δ_{H}) et/ou des courants de phase (I_{H}) du ou des moteurs de volant (LRM, LRM₁, LRM₂).

7. Procédé selon l'une des revendications précédentes, **caractérisé en ce que** le ou les moteurs de direction (LM₁, LM₂) sont commandés par le biais de signaux de commande (U_{V}) pour les courants de phase et au moins un signal de validation (g_{RH}, g_{ÛH}, g_{H11}, g_{H21}, g_{H31}).

8. Procédé selon l'une des revendications précédentes, **caractérisé en ce que** le ou les moteurs de direction (LM₁, LM₂) et/ou le ou les moteurs de volant (LRM₁, LRM₂) sont commandés par un circuit de validation par le biais d'un relais de moteur.

9. Procédé selon l'une des revendications précédentes, **caractérisé en ce que** la communication (K₁, K₂) avec d'autres modules de commande ou capteurs (10, 13, 14) du véhicule est réalisée de manière redondante.

10. Procédé selon l'une des revendications précédentes, **caractérisé en ce que** le basculement de la direction filo-commandée au mode dégradé n'a lieu qu'après écoulement d'une période de transition après la survenance d'un défaut.

11. Procédé selon l'une des revendications précédentes, **caractérisé en ce que** les positions du rotor (δ_{PH}, δ_{PV}) du ou des moteurs de volant (LRM, LRM₁, LRM₂) et/ou du ou des moteurs de direction (LM, LM, LM₂) sont détectées.

12. Procédé selon l'une des revendications précédentes, **caractérisé en ce que** la pression (pₛ) d'un accumulateur de pression du mode dégradé hydraulique est surveillée.

13. Procédé selon l'une des revendications précédentes, **caractérisé en ce que** la tension de borne (UB) ou les tensions de borne (UB₁, UB₂) de la ou des sources de tension du système de direction filo-commandée sont détectées et prises en compte lors du calcul des grandeurs de commande.

14. Procédé selon l'une des revendications précédentes, **caractérisé en ce que,** dans le premier niveau logique (L₁) :
- Contrôles de plausibilité des signaux d'entrée ;
- Sélection de l'angle du volant (1) et de l'angle de direction δ_{V}) nécessaires pour le traitement parmi les signaux présents de manière redondante ;
- Calcul des fonctions de régulation pour la commande du ou des moteurs de volant (LRM, LRM₁, LRM₂) et du ou des moteurs de direction (LM, LM₁, LM₂) ;
- Modification de la commande du dispositif (KU, USV) pour activer le mode dégradé en cas de défaut.

15. Procédé selon l'une des revendications précédentes, **caractérisé en ce que** les calculs effectués dans le premier niveau logique sont contrôlés dans le deuxième niveau logique (L₂) au moyen d'algorithmes à diversité.

16. Procédé selon l'une des revendications précédentes, **caractérisé en ce que,** dans le troisième niveau logique (L₃), une question est récupérée par le module de surveillance (ÜM) et sa réponse est donnée en tenant compte de toutes les parties du programme qui concernent la sécurité pendant un intervalle de temps prédéfini, et qu'en cas de survenance d'un défaut détecté par les niveaux logiques L₂ et L₃, les signaux de validation (g_{RV}, g_{RH}, m_{H1}, m_{H2}) pour la commande de l'électronique de puissance LE_{LM} ou LE_{LRM} du moteur de direction LM ou du moteur de volant LRM sont réinitialisés.

17. Procédé selon l'une des revendications précédentes, **caractérisé en ce que** dans le quatrième niveau logique (L₄), la réponse du troisième niveau logique est soumise à un contrôle pour vérifier sa concordance au bit près et le temps de réponse et qu'en cas de déroulement non conforme de la communication question-réponse avec le niveau logique L₃, les signaux de validation g_{ÜV} ou g_{ÜH} pour la commande des moteurs, les signaux de validation f_{ÜV} ou f_{ÜH} pour la commande du premier et du deuxième relais de moteur (17, 18) et le signal de commande (b_{ÜU}) pour l'électronique de puissance (LE_{LM}, LE_{LRM}) du moteur de direction (LM) et/ou du moteur de volant (LRM) sont réinitialisés.

18. Programme informatique, **caractérisé en ce qu'**il accomplit toutes les étapes d'un procédé selon l'une des revendications précédentes lorsqu'il est exécuté.

19. Support d'enregistrement, **caractérisé en ce qu'**un programme informatique selon la revendication 18 est enregistré sur le support d'enregistrement.

20. Module de commande pour commander un système de direction filo-commandée, **caractérisé en ce que** le module de commande accomplit toutes les étapes d'un procédé selon l'une des revendications 1 à 17.

21. Module de commande selon la revendication 20, **caractérisé en ce que** le module de commande présente au moins un microcalculateur (RM, RM₀, RM₁, RM₂, RM_{H1}, RM_{H2}, RM_{H3}, RM_{V1}, RM_{V2}, RM_{V3}) et/ou au moins un module de surveillance (ÜM, ÜM₁, ÜM₂, ÜM₃).

22. Module de commande selon la revendication 21, **caractérisé en ce que** l'au moins un microcalculateur (RM, RM₀, RM₁, RM₂, RM_{H1}, RM_{H2}, RM_{H3}, RM_{V1}, RM_{V2.,} RM_{V3}) prend en charge les tâches du premier, du deuxième et du troisième niveaux logiques (L₁, L₂, L₃) et que l'au moins un module de surveillance (ÜM, ÜM₁, ÜM₂, ÜM₃) prend en charge les tâches du quatrième niveau logique (L₄) .

23. Module de commande selon la revendication 21, **caractérisé en ce que** les microcalculateurs (RM, RM₀, RM₁, RM₂, RM_{H1}, RM_{H2}, RM_{H3}, RM_{V1}, RM_{V2}, RM_{V3}) se contrôlent mutuellement et qu'au moins un microcalculateur prend en charge les tâches du quatrième niveau logique (L₄).

24. Module de commande selon l'une des revendications 20 à 23, **caractérisé en ce que** le module de commande commande le ou les actionneurs de volant (LRM) et/ou le ou les actionneurs de direction (LRM₁, LRM₂) respectivement par le biais d'une électronique de puissance (LE_{LM1}, LE_{LM2}, LE_{LRM1}, LE_{LRM2}).

25. Système de direction filo-commandée pour un véhicule comprenant un actionneur de contre-réaction (LRM) agissant sur un volant, un dispositif de détection d'angle de volant (10), un dispositif de détection de moment manuel (13), un actionneur de direction (LRM), un dispositif de détection d'angle de direction, un dispositif de détection de moment de rappel (14), un dispositif de communication (K) et un module de commande, **caractérisé en ce que** le module de commande est un module de commande selon l'une des revendications 20 à 24 et que le système de direction filo-commandée est construit avec redondance.

26. Système de direction filo-commandée selon la revendication 25, **caractérisé en ce qu'**il existe à chaque fois une électronique de puissance (LE_{LM1}, LE_{LM2}, LE_{LRM1}, LE_{LRM2}) pour commander le ou les actionneurs de contre-réaction (LRM₁, LRM₂) et/ou le ou les actionneurs de direction (LM₁, LRM₂).
